# EUROPÄISCHE PATENTANMELDUNG

(11) **EP 3 712 769 A1**
(43) Veröffentlichungstag der Anmeldung: **23.09.2020**
(21) Anmeldenummer: 19164202.4
(22) Anmeldetag: 21.03.2019
(51) Int. Cl.: G06F 11/00, G06F 11/07, G06F 11/14

(54) **VERFAHREN UND ÜBERWACHUNGSEINHEITEN FÜR SICHERHEITSRELEVANTE GRAFISCHE BENUTZEROBERFLÄCHEN**

(71) Anmelder: Deuta-Werke GmbH, 51465 Bergisch Gladbach (DE)
(72) Erfinder: Dr. GANZ, Rudolf, 51491 Overath (DE)
(74) Vertreter: Lippert Stachow Patentanwälte Rechtsanwälte

(57) **Zusammenfassung**

Die Erfindung betrifft die sicherheitsrelevante Eingabe an einer grafischen Benutzeroberfläche (GUI). Hierbei erzeugt ein Rechner (1) Bilddaten, welche über eine Bilddatenleitung (3) an ein Display (2) übertragen werden. Die Benutzeroberfläche hat mindestens ein grafisches Bedienelement (6) das per Eingabegerät (4) selektierbar ist. Weiterhin ist eine Überwachungseinheit (21) mit der Bilddatenleitung (3) verbunden und liest für eine Sicherheitsfunktion Bilddaten aus.

Erfindungsgemäß wird der Überwachungseinheit (21) Eingabeinformation ausgehend vom Eingabegerät (4) zugeführt und die Überwachungseinheit (21) ist zur Benutzerbestätigung über einen sicheren Signalpfad (11B) mit einer Bestätigungsvorrichtung (14) verbunden. Erfindungsgemäß ist zudem vorgesehen, dass die Überwachungseinheit (21) sicherstellt und/oder überprüft, ob eine erkannte Selektion (5) des Bedienelements (6) korrekt dargestellt ist, und im Falle einer Benutzerbestätigung einer dargestellten Selektion des Bedienelements (6) einen zugeordneten sicherheitsrelevanten Bedienbefehl freigibt bzw. auslöst, insbesondere über einen sicheren Signalpfad (11D). Dies ermöglicht eine sichere Eingabe auch mit nicht sicherheitszertifizierbaren Eingabegeräten, insbesondere relativen und/oder indirekten Zeigergeräten, wie z.B. einer handelsüblichen Computermaus.

Es werden weiterhin bevorzugte Architekturen für Überwachungseinheiten vorgeschlagen, welche insbesondere für das vorgeschlagene Eingabeverfahren geeignet sind.

## Beschreibung

Die Erfindung betrifft allgemein grafische Benutzeroberflächen (GUI) in Anwendungen für welche Sicherheit im Sinne von Gefahren- bzw. Betriebssicherheit (Engl. safety) entscheidend ist.

Die Erfindung betrifft insbesondere Benutzeroberflächen bei welchen bestimmte Bedienungen bzw. Eingaben für die Sicherheit entscheidend bzw. kritisch sind, wie bspw. in einem Stellwerk für die Eisenbahntechnik oder an einem Steuerpult bzw. einer Anlagensteuerung für den Betrieb einer industriellen Anlage, eines Reaktors, oder dgl. In solchen Anwendungen muss sichergestellt sein, dass die als eingegeben erfasste Information bzw. Eingabe genau dem entspricht, was der Bediener aus- bzw. angewählt hat.

Bereits die reine Darstellung von Information als Computergrafik ist fehleranfällig. So können z.B. Fehler in jeder einzelnen Komponente des die Grafik generierenden Rechners auftreten, z.B. durch einen defekten Mikroprozessor, im Grafikprozessor, in den einzelnen Speicherbausteinen, in der Spannungsversorgung, insbesondere aber auch durch Software-Fehler im Betriebssystem, in bei der Softwareherstellung verwendeten Bibliotheken und insbesondere der Applikationssoftware, welche die GUI erzeugt.

Eine deutliche Verbesserung bietet die unter dem Markennamen IconTrust® erhältliche Technik zur Darstellung einer sicherheitsrelevanten Information gemäß dem Prinzip aus WO 2011/003872 A1 bzw. dem Patent EP 2 353 089 B1 der Anmelderin. Diese Technik kann die Darstellung sicherer gestalten und ist bspw. für die Sicherheitsstufe SIL-2 oder höher geeignet. Ein erheblicher Vorteil besteht darin, dass als nicht sicher (nachfolgend kurz unsicher) zu wertende Hardware und Software quasi beliebiger Art und Komplexität dank der Ausrüstung mit einem separaten, sicherheitszertifizierten Überwachungsmodul nachweisbar sicher eingesetzt werden kann.

Werden zusätzlich zur reinen Darstellung sicherheitsrelevanter Informationen auch sicherheitsrelevante Eingaben an der Benutzeroberflächen (GUI) vorgenommen, kommen offensichtlich weitere Fehlerquellen hinzu. Quellen potenzieller Fehler stellen grundsätzlich alle zur Erfassung und Verarbeitung der Eingabe benutzten Hardware und Software-Komponenten dar. Dies gilt insbesondere wenn ein an sich unsicheres System aus handelsüblicher Hardware nach dem vorstehenden Ansatz mit einem Sicherheitsmodul ausgerüstet werden soll, um einen Sicherheitsnachweis bzw. Sicherheitszertifizierung des Gesamtsystems zu vermeiden. Letzteres ist aber besonders wünschenswert, wenn vielfältige grafische Bedienelemente bzw. Schaltflächen in der GUI frei verwendbar sein sollen um eine intuitive Bedienung üblicher Art, wie z.B. per Computermaus oder Touchscreen, zu ermöglichen oder auch nachträgliche Veränderungen der GUI ohne erneute Zertifizierung zu erlauben.

Erschwerend kommt bei gewünschter Modularität bzw. zeitgemäßen Benutzeroberflächen bzw. GUI hinzu, dass nicht nur Funktion und Darstellung frei programmierbar sein sollte, sondern die GUI während der Anwendung auch dynamisch bzw. kontextabhängig verändern können soll. Damit einhergehende sicherheitskritische Fehlermodi betreffend die Dateneingabe (data entry) bzw. Bedienung der GUI sind vielfältig und umfassen rein beispielhaft die Fälle:
a) der unsichere darstellende Rechner ordnet einer Betätigung eines grafischen Bedienelement fälschlicherweise einen anderen als den richtigen Informationsgehalt zu (z.B. aus einem anderen Kontext);
b) das betätigte Bedienelement wurde fehlerhaft angezeigt bzw. wird nicht als betätigt erfasst (z.B. bei Notaus kritisch); oder
c) eine Betätigung eines Bedienelements wird willkürlich bzw. zufällig ausgelöst, ohne dass eine benutzergesteuerte bzw. nutzerbetätigte Eingabe tatsächlich stattgefunden hat.

Insbesondere zum erstgenannten Fall bringt die Erfindung aus dem europäischen Patent EP 2 551 787 B1 der Anmelderin, speziell bei Touchscreens entscheidende Verbesserung. Auch die beiden letzten Fälle können mit diesem Lösungsprinzip unter gewissem Zusatzaufwand vermieden werden. Dieses Prinzip ist inzwischen unter dem Markennamen SelectTrust® erfolgreich und primär für Touchscreens ausgelegt. Eine Variante speziell für HMI-Geräte mit programmierbaren Tasten (sog. Softkeys) ist im Gebrauchsmuster DE 20 2015 104 887 U1 beschrieben.

Beide Lösungen ermöglichen eine sicherheitsrelevante Eingabe an einer GUI, die durch einen als unsicher zu wertenden bzw. nicht sicherheitszertifizierten Rechner generiert wird. Hierbei wird eine Benutzeroberfläche am Display angezeigt, mit mindestens einem grafischen Bedienelement welches anhand des jeweiligen Eingabegeräts benutzergesteuert selektierbar ist. Eine separate Überwachungseinheit bzw. ein Sicherheitsmodul ist mit der Bilddatenleitung verbunden und liest für die gewünschte Sicherheitsfunktion zumindest Teile der Bilddaten aus.

Die Lösungen nach EP 2 551 787 B1 und nach DE 20 2015 104 887 U1 ermöglichen eine sichere Eingabe in dem Sinne, dass ein Benutzer - entweder per Touch-Bedienung oder über eine dem Display zugeordnete Softkey-Tastatur, d.h. absolute und direkte Eingabegeräte zur diskontinuierlichen Eingabe, ein zugeordnetes graphisches Bedienelement betätigt und die Überwachungseinheit dieser Betätigung entsprechend Koordinaten, die innerhalb der Einheit bzw. des Moduls einem vordefinierten Bereich zugeordnet sind, sicher ermittelt. Von diesen sicher ermittelten Koordinaten ausgehend setzt die Überwachungseinheit Bilddaten zum vordefinierten Bereich, insbesondere durch Codierung, unmittelbar in einen sicherheitsrelevanten Befehl um. Hierbei ist also der unsichere darstellende Rechner nicht mit einbezogen. Es ist aufgrund der Zuordnung in der Einheit bzw. dem Modul, der damit verbundenen Touch- oder Softkey-Eingabeanordnung und der Bilddatenumsetzung bzw. -codierung inhärent gewährleistet, dass die Aktivierung des Befehls, sicher dem entspricht, was der Nutzer tatsächlich am Display wahrgenommen und ausgewählt hat. Das Display selbst kann dabei für die vorliegenden Zwecke als sichere Vorrichtung bewertet werden.

Die Lösungen nach EP 2 551 787 B1 und nach DE 20 2015 104 887 U1 sind jeweils auf ein spezielles Eingabegerät angepasst und erfordern eine sicherheitstechnisch zuverlässige Bestimmung der Koordinaten des Bildbereichs zu welchem die Codierung bzw. Umsetzung in den sicherheitsrelevanten Befehl erfolgt. Beides ist mit gewissem Aufwand verbunden und schränkt die verwendbare Hardware ein.

Eine erste Aufgabe der vorliegenden Erfindung ist es mithin, eine Weiterentwicklung zu bieten die, mit unterschiedlichen herkömmlichen bzw. unsicheren Eingabegeräten, insbesondere mit einem relativen Zeigegerät wie einer Computermaus, und an einem herkömmlichen Desktop-Arbeitsplatz mit einem handelsüblichen PC als darstellendem Rechner, eine sichere Eingabe an einer grafischen Benutzeroberfläche ermöglicht. Hierbei ist die Eingabe insbesondere im Sinne der benutzergesteuerten Auswahl bzw. Betätigung eines Bedienelements der Benutzeroberfläche zu verstehen, die zumindest auch unter Verwendung des unsicheren Eingabegeräts, insbesondere eines Zeigegerätes, wie z.B. Computermaus, Trackball, Joystick, Touchpad, Touchpoint, Grafiktablett bzw. Digitizer oder dgl., ausgeführt werden soll.

Diese Aufgabe wird gelöst durch ein Verfahren nach Anspruch 1 und durch ein Sicherheitsmodul nach Anspruch 10. Die Lösung soll dabei mindestens für die Sicherheitsanforderungsstufe bzw. den Sicherheits-Integritätslevel SIL-2 (Safety Integrity Level, nach IEC 61508/IEC61511) oder höher, hier insbesondere SIL-3, geeignet sein.

Eine weitere unabhängige Aufgabe besteht darin, eine Weiterentwicklung des Prinzips aus WO 2011/003872 A1 bzw. dem Patent EP 2 353 089 B1 vorzuschlagen, welche es - insbesondere aber nicht ausschließlich für sichere Eingaben - ermöglicht, sicherheitsgerichtete Einblendungen bzw. Hervorhebungen auf sichere Weise in der grafischen Benutzeroberfläche zu erzeugen. Diese Aufgabe wird durch ein Sicherheitsmodul nach dem unabhängigen Anspruch 12 gelöst.

Ein gattungsgemäßes Verfahren bzw. System erlaubt eine sicherheitsrelevante bzw. sicherheitsgerichtete Eingabe an einer grafischen Benutzeroberfläche (nachfolgend kurz: GUI). Hierbei generiert ein Rechner pixelformatierte Bilddaten für ein Display, die vom Rechner über eine Bilddatenleitung an das Display übertragen werden. Ein Eingabegerät ermöglicht dabei das Bedienen der GUI.

Beim Anzeigen einer Benutzeroberfläche am Display wird - zumindest in einem Betriebszustand bzw. Kontext - mindestens ein grafisches Bedienelement angezeigt, dem eine sicherheitsrelevante Funktion zugeordnet ist. Das Bedienelement ist anhand des Eingabegeräts benutzergesteuert selektierbar, z.B. mittels eines Zeigers bzw. Cursors.

Weiterhin ist gattungsgemäß eine Überwachungseinheit bzw. ein Sicherheitsmodul, das vom darstellenden Rechner getrennt ist, mit der Bilddatenleitung verbunden, und liest für eine sicherheitsgerichtete Funktion zumindest Teile der Bilddaten aus.

Gemäß dem ersten Aspekt der Erfindung ist verfahrenstechnisch vorgesehen:
- dass über einen logischen oder physischen Signalpfad bzw. ersten Kanal der Überwachungseinheit Eingabeinformation, insbesondere bildpixelbezogene relative oder absolute Koordinaten, ausgehend vom Eingabegerät zugeführt wird, abhängig von welcher eine Selektion des Bedienelements erkennbar ist;
- dass die Überwachungseinheit zum Empfang einer benutzergesteuerten Bestätigung in Bezug auf die Selektion über einen sicheren Signalpfad, insbesondere einen dedizierten, separaten physischen zweiten Kanal, mit einer Bestätigungsvorrichtung verbunden ist, welche insbesondere als sichere Vorrichtung ausgeführt ist und bevorzugt vom darstellenden Rechner und/oder vom Eingabegerät signaltechnisch unabhängig ist;
- dass die Überwachungseinheit gewährleistet - insbesondere selbst sicherstellt bzw. bewirkt und/oder überprüft - dass eine bzw. jede benutzergesteuerte Selektion des Bedienelements mit Sicherheitsfunktion in denjenigen Bilddaten welche dem Display zugeführt werden erwartungsgemäß bzw. tatsächlich korrekt dargestellt ist; und
- dass die Überwachungseinheit im Fall einer benutzergesteuerten Bestätigung die über den zweiten Kanal empfangen wird innerhalb einer Zeitspanne während der eine zuverlässig, insbesondere auf sichergestellte bzw. überprüfte Weise, dargestellte Selektion des Bedienelements vorliegt, die diesem Bedienelement zugeordnete sicherheitsrelevante Funktion freigibt bzw. auslöst.

Das Auslösen kann dabei insbesondere durch Ausgabe eines entsprechenden Befehls, vorzugsweise über einen eigens zur sicheren Kommunikation vorgesehenen dritten Kanal.

Mit der Selektion anhand des Eingabegeräts geht erfindungsgemäß noch keine Betätigung bzw. Bedienung der sicherheitsgerichteten Funktion einher, sondern diese stellt zunächst nur für den Benutzer sichtbar bzw. visuell eine Auswahl des sicherheitsgerichteten Bedienelements dar. Erst mit einer benutzergesteuerten Bestätigung an der zusätzlichen Bestätigungsvorrichtung, welche vorzugsweise unmittelbar mit dem Überwachungsmodul verbunden ist und/oder sicher ausgeführt ist, wird eine Betätigung bzw. Bedienung des Bedienelements tatsächlich ausgelöst, sofern das Modul die erwarteten Voraussetzungen vom Modul entweder als erfüllt geprüft bzw. festgestellt oder selbst sichergestellt hat, insbesondere eine erwartungsgemäße bzw. korrekte Wiedergabe der Selektion in den Bilddaten welche dem Display zugeführt werden.

Das Anzeige- und Bedienkonzept klassischer Rechnerarbeitsplätze kann dabei erhalten bleiben und es können beliebige handelsübliche Eingabegeräte eingesetzt werden. Insbesondere kann erfindungsgemäß ein COTS-(commercial off-the-shelf)-Zeigegerät eingesetzt werden. Bevorzugt werden hierbei gängige indirekte und relative Zeigegeräte für die 2D-Eingabe als Eingabegeräte verwendet, insbesondere eine Computermaus oder aber gleichwertig z.B. ein Trackball, Joystick, Touchpad, Digitizer oder dgl.

Die Sicherheit der Bedienung bzw. Eingabe wird unter durch separate Betätigung an einer zusätzlichen Bestätigungsvorrichtung, z.B. einem mit der Überwachungseinheit verbundenen sicheren Taster, in Verbindung mit der erfindungsgemäß zuverlässig angezeigten Selektion erreicht. Der Benutzer wird somit als Instanz zur Bestätigung der tatsächlich gewollten Eingabe anhand der Bestätigungsvorrichtung eingebunden.

Der erfindungsgemäß vorgeschlagene Ansatz kann daher - anders als in EP 2 551 787 B1 oder DE 20 2015 104 887 U1 - auf eine sichere Eingabe und Ermittlung von Absolut-Koordinaten, z.B. durch einen Touchscreen, oder direkten Eingaben (per Softkeys) verzichten indem der Eingabevorgang im Wesentlichen in drei Teilschritte aufgetrennt wird, nämlich:
i) von der eigentlichen Betätigung getrennte Erzeugung bzw. Ermittlung der Eingabeinformation, z.B. Selektionskoordinaten;
ii) eine darauf beruhende Anzeige der Selektion bzw. Auswahl des Bedienelements zur Validierung bzw. Bestätigung der Eingabe entsprechend der angezeigten Selektion durch den Benutzer; und iii) einer anschließenden bzw. nachfolgenden Aktivierung der dem Bedienelement zugeordneten sicherheitsrelevanten Funktion in Abhängigkeit einer Bestätigung anhand der zusätzlichen Bestätigungsvorrichtung durch den Benutzer.

Im Teilschritt i) kann z.B. eine Koordinatenermittlung unter Verwendung einer handelsüblichen Computermaus erfolgen, die als relatives Zeigegerät eine Verschiebung als Koordinatenveränderung (DELTA-Koordinaten) an einen Controller übermittelt. Daraus können, z.B. auf die angezeigte Grafik bezogene, Absolut-Koordinaten aus einer vorherigen Position und der Veränderung bzw. Verschiebung gebildet werden. Um Teilschritt ii) zu realisieren, können z.B. Absolut- Koordinaten in der Überwachungseinheit, d.h. im sichereren Modul, vorgehalten und vorzugsweise durch dieses Modul, z.B. in Form des Mauszeigers, sicher an der den im Modul bekannten Absolut- Koordinaten visualisiert werden. Alternativ oder ergänzend, insbesondere für Positionen bzw. Koordinaten außerhalb von vordefinierten Bildbereichen mit sicherheitsrelevanten Bedienungselementen, kann die Visualisierung auch durch den unsicheren darstellenden Rechner erfolgen. Innerhalb vordefinierter Bildbereichen mit sicherheitsrelevanten Bedienungselementen soll die Visualisierung sicher bzw. zuverlässig an der Position erfolgen, die den im Modul vorgehaltenen Absolut-Koordinaten entspricht. Im Teilschritt iii) kann davon ausgehend der Benutzer bzw. Betrachter die Visualisierung als gültige Selektionsposition für einen sicherheitsrelevanten Bedienungselementen erkennen und validieren bzw. bestätigen, um die gewünschte Bedienung auszulösen. Dies kann in Teilschritt iii) durch Betätigung einer separaten sicheren Bestätigungsvorrichtung, wie z.B. eines Tasters erfolgen. Darauf beruhend kann die Überwachungseinheit bzw. das Modul einen entsprechenden Befehl erzeugen bzw. ausgeben.

Kurz gefasst wird hierbei also eine sicher angezeigte Selektion getrennt von der Betätigung des Bedienelements durch Bestätigung anhand der Bestätigungsvorrichtung. Somit ist eine ggf. aufwendige sichere Ermittlung der Eingabeinformation, z.B. von Absolut-Koordinaten, die mit beliebigen handelsüblichen Eingabegeräten schwer umsetzbar ist, nicht erforderlich. Weiterhin ist unerheblich über welchen Kanal, z.B. auch einen unsicheren Kanal, die Eingabeinformation der Überwachungseinheit übermittelt wird. Das unsichere Eingabegerät kann bspw. auch an den unsicheren Rechner angeschlossen sein. Die Eingabeinformation kann bspw. über die Bilddatenleitung ggf. zusammen mit den Bilddaten, z.B. in einem Pixel-Datencontainer gemäß EP 2 353 089 B1, an die Überwachungseinheit übertragen werden.

Auf die Art und Erzeugung der Eingabeinformation kommt es mit der vorgeschlagenen Lösung grundsätzlich nicht an, sodass beliebige Eingabegeräte, insbesondere indirekte und/oder relative COTS-Zeigegeräte, verwendbar sind.

Bevorzugt wird- im Gegensatz zur Lehre aus EP 2 551 787 B1 und DE 20 2015 104 887 U1 - insbesondere ein Zeigegerät (Engl. pointing device) eingesetzt welches zur relativen und kontinuierlichen Eingabe geeignet ist, insbesondere ein indirektes Zeigegerät für die 2D-Eingabe. Dabei kann ein handelsübliches bzw. COTS-Peripheriegerät, insbesondere eine Computer-Maus verwendet werden. Derartige Geräte erlauben eine intuitive Zeiger- bzw. Cursorführung in der GUI. Dementsprechend wird die relative, durch das Zeigegerät aufgenommene Bewegung übersetzt und, insbesondere relativ zur Auflösung des Displays, übersetzt in eine Zeigerbewegung bzw. in Bildkoordinaten.

Die vom Eingabegerät, insbesondere vom Zeigegerät, abhängige Eingabeinformation kann der Überwachungseinheit ferner über eine beliebige Schnittstelle zugeführt werden, insbesondere unmittelbar vom Eingabegerät - wenn dieses an die Überwachungseinheit, insbesondere eine Controller-Komponente der Überwachungseinheit angeschlossen ist - oder mittelbar vom Rechner, z.B. einem Desktop-PC mit angeschlossener Computermaus.

Die Selektion bzw. Visualisierung kann beispielsweise durch einen anhand der Überwachungseinheit eingeblendeten Mauszeiger oder andersartiges visuelles Kenntlichmachen, beispielsweise durch die farbliche Umrahmung oder Farbveränderung des ausgewählten Bedienelements, durch die Überwachungseinheit bzw. das Modul erfolgen.

Die Überwachungseinheit kann eine anschließende Eingabevalidierung bzw. Bestätigung durch den Benutzer, betreffend das z.B. durch die Überwachungseinheit visuell hervorgehobene, sicherheitskritische Bedienelement erfassen zwecks davon abhängiger Ausgabe eines Bedienbefehls entsprechend dem sicherheitskritischen Bedienelement bzw. dessen bestimmungsgemäßer Funktion in der GUI.

In einer bevorzugten Ausführungsform wird durch die Überwachungseinheit selbst sicherstellt, dass eine erkannte Selektion des Bedienelements korrekt in dem Display zugeführten Bilddaten dargestellt ist. Dies kann erzielt werden indem die Überwachungseinheit zumindest einen Teil der Bilddaten modifiziert, die zur Anzeige in einem vorbestimmten Bildbereich bestimmt sind, welcher dem Bedienelement zugeordnet ist, und die Überwachungseinheit entsprechend modifizierte Bilddaten an das Display weiterleitet. Die Modifikation kann dabei z.B. eine Zeigerdarstellung durch die Überwachungseinheit beinhalten bzw. die von dieser modifizierten Bilddaten stellen einen Zeiger positionsabhängig von der Eingabeinformation dar, die aktuell der Überwachungseinheit zugeführt wird. Die Modifizierung kann ergänzend oder alternative eine visuelle Hervorhebung bzw. visuelles Kenntlichmachen der Selektion für den Benutzer, insbesondere in einem dem jeweiligen Bedienelement zugeordneten vorbestimmten Bildbereich, am Display bewirken.

Es kann insbesondere vorgesehen sein, dass durch die Überwachungseinheit modifizierte Bilddaten rechnergenerierte Bilddaten nur bereichsweise überblenden, insbesondere in einem vergleichsweise kleineren Bildbereich bezogen auf die gesamte grafische Benutzeroberfläche, d.h. dass diese überwiegend vom darstellenden Rechner erzeugt wird.

Alternativ zum Sicherstellen der korrekten Selektionsanzeige durch Bildveränderung anhand der Überwachungseinheit selbst kann vorgesehen werden, dass vom darstellenden Rechner generierte Bilddaten eine Selektion des Bedienelements darstellen. In diesem Fall ist insbesondere vorgesehen, dass die Überwachungseinheit überprüft, dass erkannte Selektion eines Bedienelements jeweils korrekt in dem Display zugeführten Bilddaten dargestellt ist. Dies kann erreicht werden indem die Überwachungseinheit für Bilddaten, die zur Anzeige in einem vorbestimmten Bildbereich bestimmt sind, welcher dem Bedienelement zugeordnet ist, einen Prüfcode berechnet und diesen Prüfcode mit mindestens einem vorgespeicherten Referenzcode vergleicht. Hierzu ist z.B. eine Technik nach dem Prinzip aus dem Patent EP 2 353 089 B1 der Anmelderin geeignet.

Für eine einfach zu implementierende Bedienbarkeit der Benutzeroberfläche im darstellenden Rechner und/oder einfache Erkennung der Selektion in der Überwachungseinheit sollte vorgesehen werden, dass - je nachdem ob das konventionelle Eingabegerät unmittelbar an der Überwachungseinheit oder am Rechner angeschlossen ist - Eingabeinformation vom Eingabegerät über die Überwachungseinheit an den Rechner übermittelt wird oder über den Rechner an die Überwachungseinheit übermittelt wird. In einer bevorzugten Ausführungsform ist ein konventionelles Eingabegerät, insbesondere eine Computermaus, unmittelbar an die Überwachungseinheit angeschlossen.

Insbesondere in Verbindung mit Bilddatenmodifikation zum Sicherstellen der korrekten Selektionsanzeige durch Bildveränderung anhand der Überwachungseinheit ist wiederum bevorzugt vorgesehen, dass die Überwachungseinheit eine erste Rechnerkomponente umfasst, welcher eingangsseitig, insbesondere vom darstellenden Rechner über die Bilddatenleitung, die rechnergenerierten Bilddaten zugeführt werden, und die erste Rechnerkomponente abhängig von einer Selektion des sicherheitskritischen Bedienelements diese Bilddaten zur visuellen Hervorhebung der Selektion modifiziert und ausgangsseitige Bilddaten, umfassend die ggf. dementsprechend modifizierten Bilddaten, an das Display ausgibt. Dabei kann die Überwachungseinheit ferner eine zweite Rechnerkomponente umfassen, welche zur Überprüfung von ausgangsseitigen Bilddaten der ersten Rechnerkomponente, insbesondere modifizierter Bilddaten, genutzt wird, bspw. zur Bilddatencodierung zwecks Vergleich rechentechnisch erstellter Codes.

Insbesondere in einer Weiterbildung hierzu kann vorgesehen sein, dass die erste Rechnerkomponente zu rechnergenerierten bzw. eingangsseitigen Bilddaten, welche zur Anzeige im vorbestimmten Bildbereich bestimmt sind, einen Prüfcode erster Stufe berechnet und die Überwachungseinheit diesen Prüfcode erster Stufe mit mindestens einem vorgespeicherten Referenzcode für den vorbestimmten Bildbereich vergleicht, wobei die erste Rechnerkomponente vorzugsweise eingangsseitig in einem ersten Schritt Prüfcodes erster Stufe zu rechnergenerierten Bilddaten berechnet und daran anschließend in einem zweiten Schritt Bilddaten modifiziert.

In einer bzgl. Hardware- und Rechenaufwand effektiven Ausführungsform, welche auch für andere Anwendungen z.B. die Darstellungsüberprüfung modular verwendbar ist, kann vorgesehen sein Insbesondere in einer Weiterbildung hierzu kann vorgesehen sein dass:
- eine bzw. die erste Rechnerkomponente der Überwachungseinheit zu von der ersten Rechnerkomponente modifizierten Bilddaten, welche zur Anzeige im vorbestimmten Bildbereich bestimmt sind, einen ersten Prüfcode zweiter Stufe berechnet;
- eine bzw. die zweite Rechnerkomponente zu ausgangsseitigen Bilddaten der ersten Rechnerkomponente, welche zur Anzeige im vorbestimmten Bildbereich bestimmt sind, einen zweiten Prüfcode zweiter Stufe berechnet; und
- die Überwachungseinheit die so generierten Prüfcodes zweiter Stufe miteinander vergleicht, insbesondere zwecks Überprüfung einer bestimmungsgemäßen Hervorhebung der Selektion durch die erste Rechnerkomponente.

Hierbei können vorzugsweise beide Rechnerkomponenten jeweils einen dritten Prüfcode zu Bilddaten des vorbestimmten Bildbereichs ohne Selektion berechnen, welche die Überwachungseinheit miteinander vergleicht zwecks Überprüfung einer bestimmungsgemäßen Anzeige des Bedienelements vor bzw. ohne die Hervorhebung zur Anzeige der Selektion.

Es kann zur Reduzierung der notwendigen Rechenleistung vorgesehen sein, dass die Rechnerkomponente(n) nur bei einer durch die Überwachungseinheit erkannten Selektion des Bedienelements einen oder mehrere der vorgenannten Prüfcodes berechnet bzw. berechnen.

Entsprechende Prüfcodes können insbesondere zu pixelformatierten Bilddaten für einen vorbestimmten, dem Bedienelement zugeordneten Bildbereich bestimmt werden, welcher z.B. nur teilweise oder vollständig mit dem Anzeigebereich des Bedienelements übereinstimmt. Jegliches geeignete Codier-Verfahren, z.B. eine CRC-Berechnung kann hierbei verwendet werden. Es wird insoweit die Lehre aus WO 2011/003872 A1 bzw. dem Patent EP 2 353 089 B1 einbezogen.

Die erste Rechnerkomponente kann Bilddaten zur visuellen Hervorhebung der Selektion so modifizieren, dass das selektierte Bedienelement in einem von einem nicht selektierten ersten Darstellungszustand visuell unterscheidbaren selektierten zweiten Zustand angezeigt wird, beispielsweise durch Einblendung einer Umrahmung, durch Farbänderung oder dergleichen. Dies verbessert die Ergonomie bzw. vereinfacht die visuelle Erkennung der Selektion für den Benutzer. Auch eine reine Zeigeranzeige über einem Bedienelement wird jedoch bereits als dargestellte Selektion des Bedienelements verstanden. Ein Zeiger kann jedoch, sofern aktuelle Koordinaten mit dem sicherheitsrelevanten Bedienelement übereinstimmen ausgeblendet und durch eine Einblendung eines visuell erkennbaren selektierten Zustands ersetzt werden.

Grundsätzlich kann die erste Rechnerkomponente modifizierte Bilddaten in einem Bilddatenstrom zusammen mit rechnergenerierten Bilddaten an das Display ausgeben, dies kann z.B. in einfacher Weise erzielt werden indem auf die Grafik bezogen nur bereichsweise ein überschreiben bzw. überlagern der rechnergenerierten Bilddaten vorgenommen wird und die rechnergenerierten ansonsten unverändert bleiben.

Die Überwachungseinheit ist vorzugsweise als Schaltungsmodul ausgeführt. Sie kann mit der ersten Rechnerkomponente schaltungstechnisch seriell in der Bilddatenleitung, vorzugsweise nahe am Display insbesondere unmittelbar am Bilddateneingang des Displays, angeschlossen sein.

In für herkömmliche Bedienkonzepte besonders geeigneter Ausführungsform wird zum Bedienen der Benutzeroberfläche ein Zeiger bzw. Cursor, insbesondere ein durch eine Computermaus gesteuerter Mauszeiger, am Display angezeigt. Dabei kann vorgesehen sein, dass der Zeiger ausschließlich von der Überwachungseinheit generiert wird, insbesondere durch Bilddatenmodifikation in der Überwachungseinheit, z.B. anhand der ersten Rechnerkomponente, auf Grundlage der Eingabeinformation welche der Überwachungseinheit zugeführt wird. Hierbei kann wiederum das Eingabegerät, vorzugsweise ein relatives Zeigegerät, insbesondere eine Computermaus, vorzugsweise unmittelbar an die Überwachungseinheit angeschlossen sein. Dementsprechend leitet das Modul diese Eingabeinformation an den darstellenden Rechner weiterleitet.

Verfahren und Vorrichtung können so implementiert sein, dass der Zeiger bzw. Cursor in der GUI für den Benutzer sichtbar, insbesondere dauerhaft sichtbar, angezeigt bzw. eingeblendet ist, um eine gewohnte, kontinuierliche Bedienung zu ermöglichen.

Als Eingabegerät wird bevorzugt ein relatives und/oder indirektes Zeigegerät verwendet, das vorzugsweise zur kontinuierlichen Zeigerführung geeignet ist. Dabei können COTS-Zeigegeräte verwendet werden, z.B. mit USB-Anschluss. Es liegt jedoch auch im Rahmen der Erfindung nicht ein COTS-Zeigegerät, sondern eine Spezialanfertigung als Zeigegerät vorzusehen, dass mit einem herkömmlichem relativen Zeigegerät kompatibel ist (z.B. einer Computer-Maus) und zusätzlich eine unabhängige SIL-fähige Bestätigungsvorrichtung, z.B. einen signaltechnisch sicheren Taster, als integrierten Bestandteil aufweist. Die Bestätigungsvorrichtung ist dabei vorzugsweise unabhängig von der Signalverbindung des Zeigegeräts über einen eigenen getrennten Signalpfad, der logisch und/oder physisch sicher ausgelegt ist, mit der Überwachungseinheit verbunden.

In einer weiteren Ausführungsform mit Zeigerbedienung kann vorgesehen sein dass der Zeiger, zumindest außerhalb aller vorbestimmter Bildbereiche für sicherheitskritische Bedienelemente, durch den darstellenden Rechner generiert wird. Dabei kann wiederum vorgesehen sein, dass wenn eine Selektion eines sicherheitskritischen Bedienelements durch die Überwachungseinheit erkannt wird, in dem jeweils zugeordneten Bildbereich, kein rechnergenerierter Zeiger angezeigt wird, vorzugsweise durch Bilddatenmodifikation in der Überwachungseinheit. In dieser Ausführungsform kann das Eingabegerät, insbesondere eine Computermaus, auf konventionelle Weise, z.B. über einen USB-Port, unmittelbar an den darstellenden Rechner angeschlossen sein. Dementsprechend leitet letzterer dieser Eingabeinformation an die Überwachungseinheit weiter.

Insbesondere zur Vereinfachung der Bilddatenüberprüfung, bspw. durch Prüfcode-Berechnung, kann es vorteilhaft sein, wenn der Zeiger, insbesondere Mauszeiger, jeweils zyklisch ein- und ausgeblendet wird, vorzugsweise mit einer Frequenz die vom Benutzer nicht als störend wahrgenommen wird. So kann bspw. zu jeweils N aufeinanderfolgenden Bildzyklen der Bilddaten, der Mauszeiger lediglich zu einer Anzahl m < N Bildzyklen vom Rechner oder der Überwachungseinheit dargestellt werden. Dies bietet die Möglichkeit Prüfcodes für Bilddaten mit ausgeblendetem Zeiger, insbesondere zu dem/den Bedienelementen, zu berechnen was die Überprüfung auf korrekte Darstellung erheblich vereinfacht, da Zeiger typisch hoch positionsvariabel bzw. in einem sehr feinen Raster innerhalb der GUI beweglich sein sollen. Alternativ kann die Zeigerdarstellung durch geeignete Software innerhalb des/der Bedienelemente auch auf eine einzige vorgegebene Position fixiert bzw. geklippt werden, solange die ermittelten Koordinaten bzw. die Eingabeinformation nicht aus dem zugehörigen Bereich führen.

Die Eingabeinformation kann, je nach Eingabegerät insbesondere absolute Koordinateninformation, wie für ein Touch typisch, oder relative Koordinateninformation, wie für eine Computermaus typisch, darstellen. Relative Koordinateninformation kann dabei rechentechnisch einfach in absolute Koordinateninformation umgewandelt werden.

Vorrichtungsseitig wird ferner gattungsgemäß eine Überwachungseinheit zum Überwachen einer grafischen Benutzeroberfläche (GUI), vorgeschlagen, welche zumindest:
- eine digitale Bilddatenschnittstelle zur Verbindung mit einer Bilddatenleitung für die Übertragung rechnergenerierter Bilddaten von einem Rechner an ein Display, insbesondere eine LVDS-Schnittstelle, eine HDMI-Schnittstelle oder dgl.;
- mindestens eine Rechnerkomponente welche eine Sicherheitsfunktion implementiert und zumindest Teile der Bilddaten über die Bilddatenschnittstelle ausliest; und
- eine Geräteschnittstelle für Eingabeinformation, insbesondere ausgehend von einem Eingabegerät zur benutzergesteuerten Selektion eines grafischen Bedienelements; umfasst.

Weiterhin ist gemäß dem ersten Aspekt erfindungsgemäß vorgesehen, dass: die Überwachungseinheit einen physischen Bestätigungs-Eingang aufweist, an welcher die sichere Bestätigungsvorrichtung zur Eingabebestätigung bzw. Nutzervalidierung anschließbar ist, und die mindestens eine Rechnerkomponente eingerichtet ist um sicherzustellen und/oder zu überprüfen, dass eine erkannte Selektion des Bedienelements korrekt in dem Display zugeführten Bilddaten dargestellt ist, insbesondere gemäß einer der vorstehend genannten Verfahrensformen.

Weiterhin ist die Überwachungseinheit gemäß dem ersten Aspekt erfindungsgemäß eingerichtet, um bei Empfang einer Bestätigungseingabe über die Bestätigungs-Schnittstelle während bzw. in zeitlich vorbestimmten Zusammenhang mit einer dargestellten Selektion des Bedienelements einen zugeordneten sicherheitsrelevanten Bedienbefehl auszugeben, insbesondere über eine Sicherheits-Schnittstelle.

Die vorgeschlagene Überwachungseinheit hat vorzugsweise mindestens eine Rechnerkomponente die zur Bilddatenmodifikation und/oder zur Berechnung von Prüfcodes aus den Bilddaten eingerichtet ist. Sie kann mindestens einen Speicher für die Vorgabe vorbestimmter Bildbereiche und/oder Referenzcodes aufweisen, insbesondere zu Prüfzwecken.

Bevorzugt hat die Überwachungseinheit eine Controllerkomponente für ein Eingabegerät, welche mit der Geräteschnittstelle verbunden ist zum unmittelbaren Anschluss eines Eingabegeräts. So kann z.B. insbesondere eine Computermaus, unmittelbar an die Überwachungseinheit angeschlossen werden. Insbesondere in diesem Fall hat die Überwachungseinheit vorzugsweise eine Datenschnittstelle, insbesondere eine bidirektionale Datenschnittstelle, zum Übertragen von Eingabeinformation an den darstellenden externen Rechner.

Gemäß einem weiteren unabhängigen Aspekt wird bei einer gattungsgemäßen Überwachungseinheit (nach dem Oberbegriff aus Anspruch 10) erfindungsgemäß vorgeschlagen, dass diese eine zweistufige Rechnerarchitektur aufweist mit
- einer ersten Rechnerkomponente, welche eingerichtet ist um eingangsseitig rechnergenerierte Bilddaten zu erhalten und abhängig von einer Sicherheitsfunktion zumindest einen Teil der Bilddaten zu modifizieren, die zur Anzeige in einem vorbestimmten Bildbereich bestimmt sind, sowie ausgangsseitig Bilddaten an ein Display auszugeben, und mit
- einer zweiten Rechnerkomponente, welche eingerichtet ist um von der ersten Rechnerkomponente ausgegebene Bilddaten zu überprüfen, durch Berechnung eines Prüfcodes für Bilddaten, insbesondere modifizierter Bilddaten, welche zur Anzeige in dem vorbestimmten Bildbereich bestimmt sind.

Dabei kann die Überwachungseinheit nach dem zweiten Aspekt insbesondere so eingerichtet bzw. konfiguriert sein, dass sie berechnete Prüfcodes mit jeweils mindestens einem vorgespeicherten Referenzcode vergleicht, insbesondere zwecks Überprüfung einer bestimmungsgemäßen Hervorhebung durch die erste Rechnerkomponente und/oder zwecks Veranlassung einer sicherheitsgerichteten Reaktion.

Diese Überwachungseinheit mit zweistufiger Architektur eignet sich insbesondere aber nicht ausschließlich für ein Verfahren nach dem eingangs beschriebenen ersten Aspekt. Sie ist auch für andere Anwendungen vorteilhaft einsetzbar, z.B. zum sicheren Einblenden einer Zustandsanzeige dahingehend ob ein Bereich überwacht wird oder nicht, zum sicheren Anzeigen vorgegebener Überwachungsbereiche zur reinen Anzeige (ohne Eingabefunktion), zum Sicherstellen, dass als fehlerhaft dargestellte Bereich zuverlässig aus- oder überblendet werden usw.

Insbesondere gemäß dem zweiten Aspekt kann die erste Rechnerkomponente konfiguriert sein um zu rechnergenerierten Bilddaten, welche zur Anzeige in einem Überwachungsbereich bestimmt sind, einen Prüfcode zu berechnen für einen sicherheitsgerichteten Vergleich mit mindestens einem vorgespeicherten Referenzwert, insbesondere Referenzcode, für den Überwachungsbereich. Dabei kann die erste Rechnerkomponente zuerst eingangsseitig Prüfcodes zu rechnergenerierten Bilddaten berechnen und daran anschließend in einer zweiten Stufe Bilddaten modifizieren, bspw. zur Hervorhebung sicherheitsrelevanter Information oder als sicherheitsgerichtete Reaktion in einem Fehlerfall. Insbesondere in einer Weiterbildung nach dem zweiten Aspekt kann vorgesehen sein, dass die erste und zweite Rechnerkomponente unterschiedliche Codier-Verfahren implementieren und/oder durch zwei getrennte integrierte Schaltungen, wie FPGA, ASIC oder dgl., insbesondere unterschiedlicher Bauart, implementiert sind - um Anfälligkeit für systematische Fehler durch Diversität zu minimieren.

Ungeachtet des ersten oder zweiten Aspekts hat die Überwachungseinheit bevorzugt ein Modul zur sicherheitsgerichteten Kommunikation über eine Bus-Schnittstelle, die somit als Sicherheits-Schnittstelle zur Ausgabe von sicherheitsrelevanten Bedienbefehlen verwendbar ist, insbesondere zur Kommunikation nach IEC 61784-3-3 bzw. PROFIsafe-Protokoll oder dgl.

Ungeachtet des ersten oder zweiten Aspekts kann die Überwachungseinheit, insbesondere durch programmierbare Rechnerkomponenten, wie z.B. FPGA und/oder Mikrocontroller, so konfiguriert werden dass diese zur rechnerimplementierten Durchführung mindestens eines Verfahrensschritts nach einer der weiter oben erläuterten verfahrenstechnischen Ausführungsformen eingerichtet ist.

Die vorgeschlagene Überwachungseinheit nach dem ersten oder zweiten Aspekt ist besonders geeignet zum Ausrüsten eines Displaygerät zur Anzeige von Pixelgrafik, insbesondere mit einem TFT-Panel, wobei die modulartige Überwachungseinheit in das Gerät integriert sein kann, z.B. unmittelbar am Bilddateneingang. Das Display kann dabei zumindest einen mit der Geräteschnittstelle der Überwachungseinheit verbunden Anschluss für ein Eingabegerät sowie einen mit dem Bestätigungs-Eingang der Überwachungseinheit verbunden Anschluss für eine sichere Bestätigungsvorrichtung aufweisen.

Die Erfindung betrifft auch ein System für eine sicherheitsrelevante Eingabe an einer GUI, umfassend einen Rechner und ein mit diesem über eine Bilddatenleitung verbundenes Display für Pixelgrafik. Erfindungsgemäß ist dabei, insbesondere nach dem ersten Aspekt, eine vom Rechner physisch getrennte Überwachungseinheit wie vorstehend beschrieben vorgesehen.

Nach dem ersten Aspekt kann das System weiterhin ein Eingabegerät, insbesondere eine Computermaus, zum Bedienen einer Benutzeroberfläche umfassen, welches vorzugsweise unmittelbar an die Geräteschnittstelle der Überwachungseinheit angeschlossen ist. Weiterhin ist zumindest nach dem ersten Aspekt eine separate sichere Bestätigungsvorrichtung, insbesondere ein Sicherheitstaster, z.B. mit Öffner- und Schließ-Kontakt, an den physischen Bestätigungs-Eingang der Überwachungseinheit angeschlossen.

Die vorstehenden Verfahrensmerkmale und Vorrichtungsmerkmale sind untereinander kombinierbar und jeweils auch unabhängig bzw. für sich genommen als erfindungserheblich anzusehen.

Die vorgeschlagene Lösung kann beispielsweise zum Parametrieren in sicherheitsrelevanten Prozessen bzw. Anlagen, z.B. der Prozesstechnik oder der Automatisierungs-Technik, vorteilhaft eingesetzt werden, um eine sichere und zugleich benutzerfreundliche Bedienung durch eine GUI zu ermöglichen.

Das Anwendungsgebiet der Erfindung ist nicht auf Displays oder Desktop-Rechnersysteme beschränkt, sondern umfasst auch sog. Convertibles oder tragbare Kleingeräte, z.B. zur Fernsteuerung von Maschinen oder Anlagen. Solche Kleingeräte, wie Tablett-PCs und dgl., werden beispielsweise inzwischen zur Steuerung von Container-Kränen in Häfen oder zur Programmierung von Industrierobotern verwendet. Ferner kann die Erfindung auch im Bereich kritischer Zugriffs- bzw. Autorisierungssicherheit (Engl. security), insbesondere von autorisierungsbedürftigen Systemen Anwendung finden.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Hierbei zeigen
**FIG.1****:** ein Prinzipschema eines Systems für sicherheitsrelevante Benutzereingaben an einer von einem unsicheren Rechner erzeugten, grafischen Benutzeroberfläche (GUI);
**FIG.2A-2C****:** drei Ausführungsbeispiele zum Überwachen einer GUI, mit Eingabegerät und Bestätigungsvorrichtung an einer erfindungsgemäßen Überwachungseinheit (FIG.2A); mit Eingabegerät am darstellenden Rechner und Bestätigungsvorrichtung an einer erfindungsgemäßen Überwachungseinheit angeschlossen (FIG.2B); und (FIG.2C) eine Variante zur Bestätigungsvorrichtung aus FIG.2A;
**FIG.3A-3C****:** zur Veranschaulichung eines erfindungsgemäßen Verfahrens unterschiedliche Zustände einer rein beispielhaften GUI an einem Display, mit Bedienelementen und einem Mauszeiger zur Selektion eines Bedienelements in unterschiedlichen Zuständen: mit einem selektierten nicht sicherheitsrelevanten Bedienungselement (FIG.3A), ohne Selektion (FIG.3B), und mit einem selektierten sicherheitsrelevanten Bedienungselement (FIG.3C);
**FIG.4A-4B****:** zwei Ausführungsbeispiele einer Überwachungseinheit mit schematischen Signalflussdiagrammen zur Veranschaulichung, wie die Überwachungseinheit sicherstellt, dass eine erkannte Selektion eines Bedienelements korrekt in Bilddaten dargestellt ist;
**FIG.5A-5B****:** Architekturen einer Überwachungseinheit zur sicheren Eingabe (FIG.5A) und/oder Anzeige (FIG.5B) in sicherheitskritischen Anwendungen gemäß einem unabhängigen Erfindungsgedanken; und
**FIG.6****:** ein Prinzipschema eines Displaygeräts mit integrierter Überwachungseinheit gemäß einem der Erfindungsaspekte.

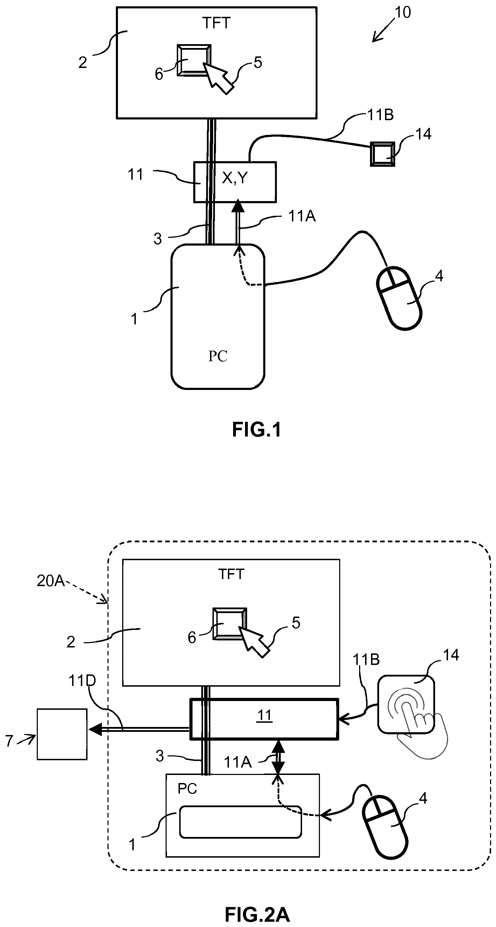

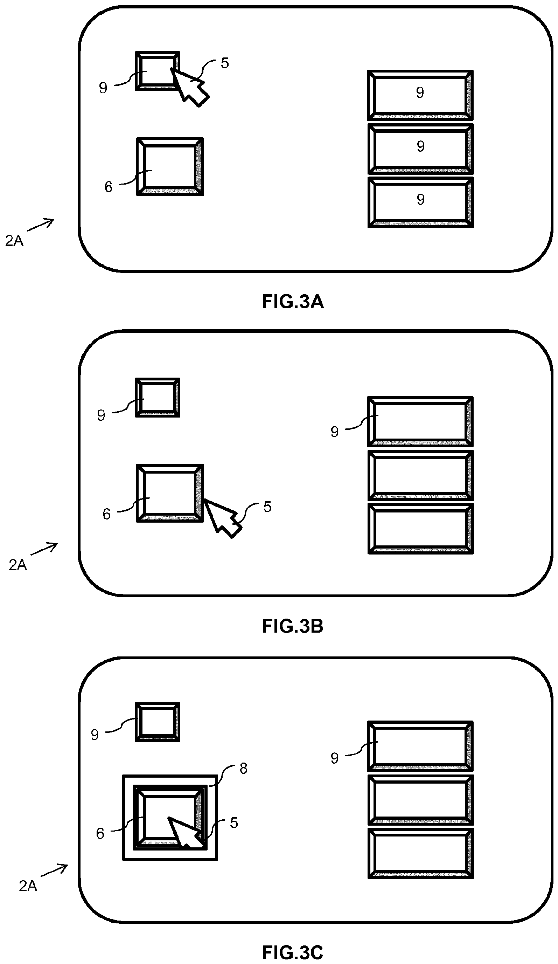

FIG.1 zeigt schematisch eine Anordnung bzw. ein System 10 für sicherheitsrelevante Eingaben an einer grafischen Benutzeroberfläche (GUI), mit einem Rechner 1, welcher pixelformatierte, digitale Bilddaten generiert und einem COTS-Display 2, z.B. einem TFT-Computerbildschirm, über eine geeignete Bilddatenleitung 3 zur Anzeige zuführt. Als Grafik darstellender Rechner 1, nachfolgend kurz PC 1, kommt dabei jeder COTS-Computer, z.B. ein Desktop-PC in Betracht. Der PC 1 ist im Sinne der Sicherheitsanforderungen als unsicher zu betrachten bzw. nicht sicherheitszertifiziert. Der PC 1 ist unter anderem zum Darstellen einer beliebigen, anwendungsabhängig gewünschten GUI am Display 2 programmiert (vgl. FIG3A-3C), ggf. mit kontextabhängig unterschiedlichen Modi bzw. Bildschirmmasken. Teil des Systems 10 in FIG.1 ist ein Eingabegerät zum Bedienen der GUI nämlich ein relatives, kontinuierliches und indirekte Zeigegerät, hier eine handelsübliche Computermaus 4. Die COTS- Computermaus, kurz Maus 4 ist in üblicher Technik, in FIG.1 z.B. am PC 1 angeschlossen. Die Maus 4 ist sicherheitstechnisch auch als nicht sicher zu sehen.

Anhand der Maus 4, oder einem anderen relativen, indirekten und kontinuierlichen, kann der Benutzer in gewohnter Weise grafische Bedienelemente bedienen, durch Bewegung eines Positionszeigers bzw. Mauszeigers 5 in der vom PC 1 generierten GUI.

Zum Erreichen der gewünschten Sicherheitsstufe, z.B. SIL-3, trotz Verwendung unsicherer Komponenten, wie des unsicher darstellenden PCs 1 und eines COTS-Eingabegeräts, hier der Maus 4, ist - wie in FIG.1 schematisch dargestellt - eine modulare Überwachungseinheit 11 vorgesehen. Die Überwachungseinheit 11 ist in Form von separater Hardware bzw. als eigenständiges Modul vorgesehen und sicherheitszertifiziert. Die modulare Überwachungseinheit 11, nachfolgend kurz SMU (Engl. safety monitoring unit) ist mit der Bilddatenleitung 3 verbunden und kann z.B. am Bilddateneingang des Displays 2 angeschlossen sein. Die SMU 11 ist eingerichtet um zur Realisierung einer Sicherheitsfunktion zumindest Teile der Bilddaten aus der Bilddatenleitung 3 auszulesen und vorbestimmte Bildbereiche zu überwachen, insbesondere zwecks Fehleraufdeckung, und/oder ggf. auch zwecks Anzeige am Display 2 Bilddaten zu modifizieren. Die Bilddatenleitung 3 kann in jedem geeigneten Signalformat z.B. LVDS oder dgl. übertragen, wobei die Bilddaten vorzugsweise digital und pixelformatiert sind.

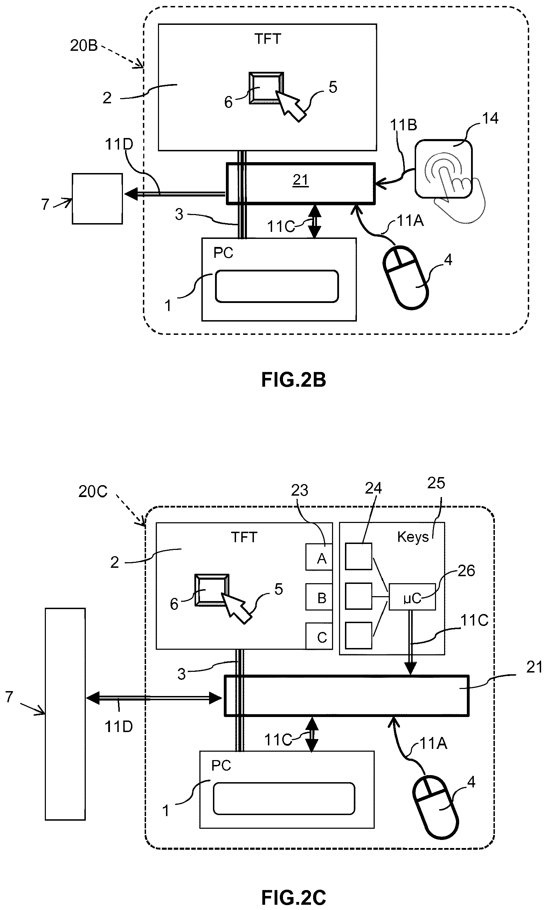

Der SMU 11 werden weiterhin über einen ersten Signalpfad bzw. Kanal 11A, der nicht sicher ausgeführt sein muss, Eingabeinformationen zugeführt. Diese umfassen insbesondere ausgehend von Bedienung der Maus 4 bestimmte Koordinaten, entweder Relativkoordinaten (FIG.2B) oder daraus generierte grafikbezogene Zeigerkoordinaten (FIG.2A) eines Mauszeigers 5 (=Cursor). Zeigerkoordinaten können in FIG.1 z.B. vom PC 1 aus Relativkoordinaten der Maus 4 ermittelt und über den ersten Kanal 11A vom PC 1 an die SMU 11 übertragen werden. Auf Grundlage solcher Eingabeinformation, insbesondere der Zeigerkoordinaten, kann die SMU 11 ein Anwählen bzw. eine benutzergesteuerte Selektion eines sicherheitskritischen Bedienelements 6 (hier nur schematisch angedeutet) erkennen. Als sicherheitskritisches Bedienelement 6 wird kommt hierbei jedes Bedienelement der GUI in Betracht, dessen Betätigung eine anwendungsabhängige sicherheitsrelevante Funktion im Sinne der Gefahren- bzw. Betriebssicherheit (Engl. safety), (z.B. das Umstellen von Weichen in einem Stellwerk der Eisenbahntechnik), oder auch der Zugriffs- bzw. Autorisierungssicherheit (Engl. security), zugeordnet ist bzw. auslösen soll (z.B. eine PIN-Eingabe). Ein solches sicherheitskritisches Bedienelement wird nachfolgend kurz mit SEE (Engl. safety/security relevant entry element) bezeichnet.

FIG.1 zeigt weiterhin eine separate Bestätigungsvorrichtung 14, hiernach kurz CD (Engl. confirmation device), die über einen zweiten Signalpfad bzw. Kanal 11B an die SMU 11 angeschlossen ist. Die CD 14 ist bevorzugt von der Maus 4 hardwaremäßig getrennt ausgeführt. Die CD 14 ist vorzugsweise SIL-fähig und jedenfalls über einen eigenen, sicheren Kanal 11B an die SMU 11 angeschlossen. Die CD 14 dient im System 10 zur benutzergesteuerten Bestätigung einer gewünschten Bedienung bzw. Betätigung eines sicherheitskritischen Bedienelements, schematisch als SEE 6 gezeigt, das anhand des durch die Maus 4 gesteuerten Cursors 5 zuvor angewählt wurde. Betätigung von Tasten der Maus 4 wird insoweit bei SEEs 6 durch entsprechende Programmierung ignoriert bzw. kann nicht zum Auslösen einer dem betrachteten SEE 6 zugeordneten kritischen Funktion dienen. Ein entsprechendes Auslösen muss vielmehr vom Benutzer anhand der CD 14, z.B. eines sicheren Tasters bzw. Push-Buttons, vorgenommen werden. Der Benutzer validiert bzw. bestätigt für ein bzw. jedes vorgesehene SEE 6 somit seine Auswahl bzw. Selektion jeweils separat und einzeln durch Eingabe an bzw. Betätigung der zusätzlichen CD 14.

Eine Selektion von Bedienelementen, einschließlich eines von ggf. mehreren SEE 6 erfolgt entsprechend einer Nutzersteuerung des Cursors 5. Die SMU 11 ist weiterhin rechentechnisch so konfiguriert, z.B. programmiert, dass diese entweder selbst sicherstellt, zumindest aber überprüft, dass eine erkannte Anwahl bzw. Selektion eines von ggf. mehreren SEE 6 (vgl. zu FIG.3A-3C unten) korrekt in denjenigen Bilddaten dargestellt ist, die über die Bilddatenleitung 3 dem Display 2 zugeführt werden. So wird gewährleistet, dass eine Selektion, die innerhalb des SMU 11 programmtechnisch als aktuell vorgenommen gilt, z.B. auf Grundlage von Zeigerkoordinaten des Cursors 5, sich in sicherer Weise mit dem deckt, was dem Betrachter bzw. Benutzer durch geeignetes Kenntlichmachen am Display 3 angezeigt wird. Letzteres kann softwaretechnisch in der SMU 11 umgesetzt werden.

Wie dabei das Kenntlichmachen für den Benutzer erfolgt, insbesondere ob durch den PC 1 oder die SMU 11 erzeugt, ist zweitrangig, solange ein Benutzer die Selektion, die von der SMU 11 als aktuell geltend betrachtet bzw. vorgehalten wird, visuell erkennt. Das Kenntlichmachen kann sich insbesondere bereits darin erschöpfen, dass der Cursor 5 in herkömmlicher Weise auf ein SEE 6 zeigt, da dies für den Benutzer sichtbar ist und der gewohnten Bedienung entspricht. Das Anzeigekonzept und das Bedienkonzept klassischer Desktoparbeitsplätze mit PC 1, Display 2 und per mausgeführtem Cursor 5 in einer GUI bleibt so erhalten.

Die gewünschte Sicherheitsstufe, z.B. SIL-3, erreicht das System 10 u.a. dadurch, dass nicht der (unsichere) darstellende PC 1, sondern ausschließlich die sichere bzw. SIL-geeignete SMU 11 bei Empfang einer benutzergesteuerten Bestätigung von der eigens dazu vorgesehenen CD 14 einen sicherheitsrelevanten Bedienbefehl auslöst bzw. eine sicherheitsrelevante Funktion passend zum selektierten SEE 6 freigibt. Eine eindeutige Zuordnung der Selektion eines beliebigen Bedienelements der GUI ist bei zeigerbasierten GUI mit Cursor 5 inhärent (da stets nur ein Cursor 5 vorliegt). Die Bestätigung wird, sofern gegeben, genau einer einzigen aktuell von der SMU 11 als sicher angezeigt betrachteten Selektion, d.h. genau einem SEE 6 zugeordnet, oder andernfalls verworfen. Dazu wird insbesondere eine Aktivierung der CD 14 während einer dargestellten Selektion des betroffenen SEE 6 von der SMU 11 überwacht bzw. abgefragt und zum Auslösen eines diesem SEE 6 zugeordneten Bedienbefehls durch die SMU 11 genutzt. Ein Überwachen bzw. Abfragen der CD 14 kann ausbleiben wenn die SMU 11 keine gültige Selektion eines von ggf. mehreren SEE 6 erkennt bzw. nur bei erkannter Selektion erfolgen (Fail-Safe-Verhalten). Das Display 2 wird vorliegend als sicher angesehen, da typische Fehlerfälle für den Benutzer erkennbar sind (Fehleraufdeckung). Zusätzliche Hardware-Maßnahmen zur Überprüfung einer korrekten Anzeige am Display 2 können jedoch ebenfalls realisiert werden.

FIG.2A-2C zeigen drei Ausführungsformen erfindungsgemäßer Systeme 20A, 20B, 20C zur sicheren Eingabe anhand eines relativen Zeigegeräts, mit einer SMU 11 bzw. 21 im Bilddatenstrom 3.

FIG.2A zeigt ein System 20A das weitgehend dem Prinzip aus FIG.1 entspricht, nämlich mit einer Maus 4 die unmittelbar am PC 1 angeschlossen ist, z.B. an einem USB-Port, sowie einem sicheren Taster als CD 14. Die CD 14 ist über einen sicheren Kanal 11B unmittelbar an die separate SMU 11 angeschlossen. Die relativen Koordinaten der Maus 4 werden hier im PC 1 in bildbezogene bzw. absolute Zeigerkoordinaten zur Steuerung des Cursors 5 gewandelt und laufend über einen Kanal 11A, der nicht sicher ausgelegt sein muss, an die SMU 11 übermittelt. Der Kanal 11A ist beim System 20A bidirektional ausgelegt, sodass die SMU 11 Steuerbefehle an den PC 1 rücksenden kann, insbesondere betreffend die Darstellung am Display 2, z.B. hinsichtlich einer Ausblendung des Cursors 5, wenn dieser auf ein SEE 6 zeigt, zu einer zusätzlichen visuellen Hervorhebung des SEE 6 auf das der Cursor 5 aktuell zeigt (Selektion), usw. Wenn die Maus am PC 1 angeschlossen ist, ist dieser vorzugsweise so programmiert, dass SEEs 6 nicht unmittelbar über den PC 1 bzw. über Tasten der Maus 4 bedient werden können.

Weiterhin ist die SMU 11 über einen sicheren Signalpfad bzw. Kanal 11D mit einem externen, übergeordneten Sicherheitsrechner 7, z.B. einer Anlagensteuerung oder dgl., verbunden. Die SMU 11 gibt bei Empfang einer benutzergesteuerten Bestätigung am Taster 14, während einer dargestellten Selektion des SEE 6 (auf das der Cursor 5 zeigt), z.B. einer GUI-Validierungstaste für eine Anlagenparametrierung, einen dem SEE 6 zugeordneten sicherheitsrelevanten Bedienbefehl aus, z.B. über den Kanal 11D an den Sicherheitsrechner 7.

Die CD 14 kann funktional sicher ausgelegt sein, z.B. über geeignete Controller-Technik in der SMU 11, und z.B. als einkanaliger Taster 14 ausgeführt sein. Durch einen geeigneten Controller kann eine zuverlässige Funktion der CD 14 rein softwaremäßig sichergestellt werden. Für höhere Sicherheitsanforderungen kann die CD 14 auch zweikanalig, z.B. mit Öffner und Schließer, und/oder physisch sicher ausgeführt sein. Es muss vor allem sichergestellt sein, dass die CD 14 nicht fehlerhaft eine tatsächlich nicht vorgenommene Betätigung an die SMU 11 übermittelt. Ein Ausbleiben einer vorgenommenen Betätigung an der CD 14 wird vom Benutzer als Fehler erkannt.

Mit dem System 20A nach FIG.2A kann eine kontinuierliche Einblendung des Zeigers 5, der durch die Maus 4 gesteuert wird, bspw. anhand des darstellenden PCs 1 erfolgen und die Darstellung am Display 2 von der SMU 11 auf Korrektheit überwacht werden, z.B. gemäß dem Konzept aus WO 2011/003872 A1.

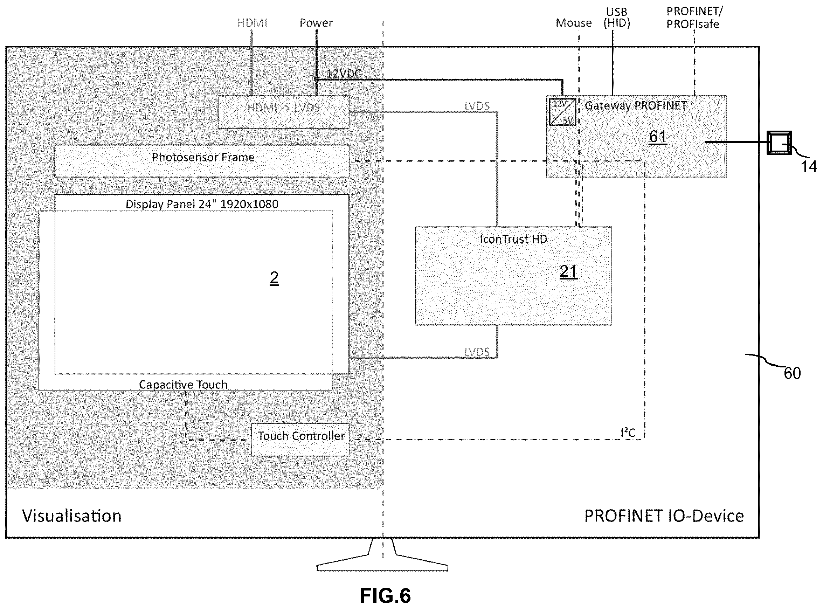

FIG.2B zeigt ein bevorzugtes System 20B, welches sich von FIG.2A vor allem dadurch unterscheidet, dass die Maus 4 hier über den Kanal 11A unmittelbar an die SMU 21 angeschlossen ist. Hierzu kann die SMU 21 z.B. einen hierfür geeigneten Eingabegeräte-Controller, bspw. in einem vorhandenen Mikrocontroller bzw. Prozessor umfassen, oder eine integrierte separate Komponente aufweisen. Der Eingabegeräte-Controller kann auch extern realisiert sein und über eine Schnittstelle mit der SMU 21 kommunizieren (FIG.6). Bei der bevorzugten Architektur aus FIG.2B erfolgt innerhalb der SMU 21 eine Umwandlung der Relativkoordinaten, welche die Maus 4 als Eingabe erzeugt bzw. überträgt, in bildbezogene Zeigerkoordinaten. Resultierende bildbezogene Zeiger-Koordinaten oder auch die relativen Eingabekoordinaten der Maus und ggf. Maustasten-Interrupts werden dann zwecks Steuerung der GUI von der SMU 21 über den Datenkanal 11C laufend an den PC 1 übermittelt, sodass der PC 1 für nicht sicherheitsrelevante Eingaben die Position des Zeigers zur Darstellung der GUI und evtl. Betätigung der von Tasten der Maus 4 verarbeiten kann.

Mit dem System 20B nach FIG.2B erfolgt eine kontinuierliche Einblendung des Zeigers 5, durch die Maus 4 gesteuert, bevorzugt innerhalb der bzw. durch die SMU 21 selbst. Dazu bewirkt die SMU 21 eine Modifikation der Bilddaten, welche an das Display 2 weitergeleitet werden, z.B. durch bereichsweises Überblenden der vom PC 1 generierten Grafik. Dabei hat die SMU 21 inhärent stets Kenntnis über die Zeigerkoordinaten und auch über jede Selektion eines SEE 6, um bei anschließender Bestätigung durch den Benutzer mittels der CD 14 eine zugeordneten kritische Funktion auszulösen, z.B. einen zugeordneten sicherheitsrelevanten Bedienbefehl über den Kanal 11D an den Sicherheitsrechner 7 weiterzuleiten.

FIG.2C zeigt eine weitere Variante eines Systems 20C, welches sich vor allem durch die Art der Bestätigungsvorrichtung (CD) unterscheidet. Im System 20C ist eine Softkey-Tastatur 25, die an einem das Display 2 umfassenden HMI vorgesehen ist, mit der SMU 21 als sichere Bestätigungsvorrichtung über eine sichere Signalstrecke 11B verbunden. Die Softkey-Tastatur 25 entspricht dabei der Bauweise gemäß DE 20 2015 104 887 U1, auf welche insoweit Bezug genommen wird. Durch den Softkey-Controller 26 wird funktionale Sicherheit der physischen Tasten 24 sichergestellt. Die SMU 21 kann alternativ direkt und sicher die Tasten 24 auslesen. Die Tasten 24 sind typisch am Rand des Displays 2 angeordnet. Es können dabei grafische Icons 23, Symbole etc. durch den PC 1 angezeigt werden, die den einzelnen Tasten 24 der Softkey-Tastatur 25 zugeordnet sind. Zur Bestätigungseingabe für ein SEE 6 kann kontextabhängig eine jeweils andere oder stets dieselbe Taste 24 genutzt werden, wobei z.B. anhand eines geeigneten Icons 23 dem Benutzer in der GUI die Sicherheitsrelevanz bzw. der erforderliche Bestätigungsvorgang visuell angezeigt werden kann für eine intuitivere Benutzung. Die Korrektheit der Darstellung solcher Icons 23 kann wiederum ebenfalls von der SMU 21 überwacht werden, z.B. durch Codieren der zugeordneten Bilddaten und Vergleich mit einem erwarteten Referenzcode, gemäß dem Konzept aus WO 2011/003872 A1.

Auch beim System 20C wird eine Trennung zwischen der zeigerbasierten Auswahl bzw. Selektion von kritischen SEE 6 und deren eigentlicher Betätigung/Bedienung durch eine gesonderte Bestätigung, hier an einer der Softkey-Tasten 24 realisiert. Die entsprechende Softkey-Taste 24 ist zur Bestätigungseingabe dem selektierten SEE 6 in der SMU 21 vorbestimmt zugeordnet. Dementsprechend kann die SMU 21 bei tatsächlicher Bestätigung durch den Benutzer, d.h. Drücken der vorbestimmten Taste 24, den zugeordneten Bedienbefehl über den Kanal 11D an den Sicherheitsrechner 7 ausgeben. Im Übrigen kann das System 20C, wenn der Cursor 5 ausschließlich von der SMU 21 eingeblendet wird, zusätzlich ggf. auch weitere Funktionalitäten gemäß DE 20 2015 104 887 U1 oder auch gemäß EP 2 551 787 B1 realisieren. Bei Einblendung des positionsvariablen Cursors durch den PC 1 wäre dies wegen erforderlichen eindeutigen Prüfcode aus den Bilddaten jedoch nicht ohne erheblichen Software-Aufwand möglich. Hier steht jedoch hier eine sichere Bedienung der GUI per Cursor 5 anhand eines relativen, kontinuierlichen und indirekten Eingabegerätes wie der Maus 4 im Vordergrund steht, d.h. sonstige Funktionen der Softkey-Tasten 24 neben der Bestätigungseingabe optional sind.

Anhand einer schematischen GUI 2A in FIG.3A-3C wird nachfolgend die Funktionsweise bzw. das Verfahren kurz erläutert.

Der Benutzer bewegt den Cursor 5 über das vom Display 2 angezeigte Bild bzw. innerhalb der GUI 2A. Dabei sind ggf. auch eine Anzahl nicht sicherheitsrelevanter Bedienelemente 9 vorgesehen, deren Bedienung in ganz herkömmlicher Weise durch den PC 1 umgesetzt wird, ggf. ohne Mitwirkung der SMU 11; 21.

Wenn die Position des Cursors 5, erkennbar anhand der Zeigerkoordinaten, jedoch in einen vordefinierten Bildbereich (Überwachungsbereich) entsprechend einem SEE 6 geführt wird, erkennt die SMU 11; 21 eine sicherheitsrelevante Selektion. Die Zeigerkoordinaten (Absolut-Koordinaten) sind dazu in der SMU 11; 21 stets aktualisiert vorgehaltenen. Eine Selektion wird erkannt anhand der grafikbezogenen Bildkoordinaten, die in der SMU 11; 21 als Anzeigebereich des SEE 6 bzw. entsprechender Überwachungsbereich vorbestimmt sind. Ein Eintreten des Cursors 5 in diesen Grafikbereich der GUI 2A, wird so z.B. in einer Eingangsstufe der SMU 11; 21 erkannt. Optional erfolgt, entweder durch den PC 1 gesteuert durch die SMU 11; 21 oder vorzugsweise durch die SMU 11; 21 selbst, eine zusätzliche visuelle Hervorhebung dieses Bereichs, bspw. durch eine deutlich erkennbare Umrandung 8 oder dgl. , wie schematisch in FIG.3C angedeutet.

Die SMU 11; 21 hat aufgrund der aktuellen Zeigerkoordinaten des Zeigers 5 Kenntnis über eine vorliegende Selektion des bzw. eines SEE 6. Im Fall einer solchen Selektion wird von der SMU 11; 21 eine korrekte Zeigerdarstellung und optional geeignete visuelle Hervorhebung überprüft oder sichergestellt. Darauf beruhend kann die SMU 11; 21 eine, insbesondere während der aktiven Hervorhebung des angewählten SEE 6, erfolgende Bestätigungseingabe am sicheren Taster 14 bzw. 24 als Validierung durch den Benutzer erkennen und der entsprechenden sicherheitskritischen Funktion des SEE 6 zuordnen. Bei entsprechender Bestätigungseingabe an der CD 14 bzw. 24 kann die SMU 11; 21 die sicherheitskritische Funktion freigeben z.B. einen entsprechenden Befehl an den Sicherheitsrechner 7 ausgeben. Dieser Befehl kann eine beliebige vorbestimmte Form haben und z.B. auch codierten Bilddaten zum SEE 6 entsprechen. Betätigung von konventionellen Maustasten der Maus 4 werden dabei ignoriert, weil als unsicher betrachtet, und können die Freigabe bzw. Befehlsausgabe durch die SMU 11; 21 nicht bewirken. Letzteres lässt sich leichter implementieren wenn die Maus 4 unmittelbar an die SMU 11; 21 angeschlossen ist (FIG.2B).

Ein Überprüfen der Hervorhebung, insbesondere wenn durch den unsicheren PC 1 bewirkt, kann auch hier durch Codierung der Bilddaten eines zugeordneten Überwachungsbereichs in der SMU 11; 21 und Vergleich mit einem Soll-Code bzw. Referenzcode erzielt werden, z.B. gemäß WO 2011/003872 A1.

Die visuelle Hervorhebung der Auswahl eines SEE 6 kann sich allein in der Darstellung des Cursors 5 erschöpfen. Zur rechentechnischen Vereinfachung kann der Cursor 5 optional, wenn per Maus 4 in den Bildbereich eines SEE 6 geführt, über eine Art Clipping bzw. Snapping an einer vordefinierten Stelle gesetzt und gehalten werden, insbesondere wenn der Cursor 5 grafisch vom PC 1 erzeugt wird. Der Cursor 5 kann dabei z.B. mit Zeigerkoordinaten entsprechend der geometrischen Mitte des SEE 6 angezeigt bzw. eingeblendet, wobei die aktuellen Zeigerkoordinaten (Absolut-Koordinaten) überschrieben bzw. ignoriert werden können. So erhält der Cursor 5 im Falle der Anwahl bzw. Selektion stets eine vordefinierte grafische Darstellung innerhalb des selektierten SEE 6, sodass eine sicherheitsgerichtete Grafikprüfung, z.B. per Codevergleich, in der SMU 11; 21 ggf. spürbar vereinfacht wird. Zudem wird die Bediensicherheit erhöht bzw. der Benutzer kann dieses Verhalten als sicherheitsrelevant erkennen. Bei dieser Variante wird erst wenn der Cursor 5 anhand der Maus 4 in ausreichendem Maße aus dem überwachten Bildbereich des SEE 6 geführt wurde, in den üblichen Anzeigemodus zurückgeschaltet.

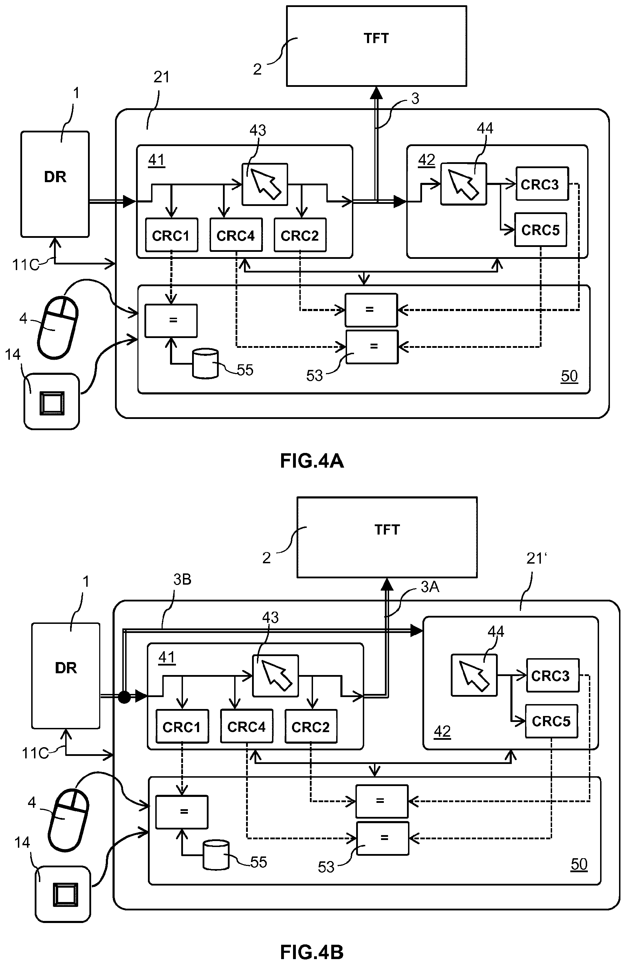

Bevorzugt wird jedoch die Hervorhebung durch die SMU 11; 21 selbst bewirkt, insbesondere durch Modifikation der an das Display weitergeleiteten Bilddaten, auf welche die entsprechend mit der Bilddatenleitung 3 verschaltete SMU 11; 21 bestimmungsgemäß Zugriff hat. Die SMU 11; 21 selbst kann dazu insbesondere den Cursor 5 in die Bilddaten einblenden, wodurch die eine sicherheitsgerichtete Codierung der Bilddaten ebenfalls vereinfacht wird (vgl. zu FIG.4A-4B unten).

In beiden Fällen kann die SMU 11; 21 gewährleisten, dass die Zeigerkoordinaten des angezeigten Cursors 5 (für den Benutzer sichtbar) bei einer Selektion eines SEE 6 mit diesem übereinstimmen bzw. innerhalb des entsprechend überwachten Bildbereichs liegen. Die Validierung der Anwahl bzw. Selektion (=Vorauswahl) eines SEE 6 erfolgt von der Selektion getrennt durch den Benutzer, nämlich durch Betätigung der CD 14; 24. Dies wird von der SMU 11; 21 als notwendige Bedingung überwacht um die zugeordneten sicherheitsrelevante Aktion zu veranlassen.

FIG.4A-4B zeigen bevorzugte Implementierungen und Architekturen von SIL-geeigneten bzw. SIL-fähigen SMU 21, 21' z.B. für das Prinzip nach FIG.2B. Die Darstellung in FIG.4A-4B ist z.T. als Signalflussdiagram ausgeführt zur Beschreibung einer bevorzugten Funktionsweise. Die SMU 21, 21' sind als separate, modulare Hardware in Form einer Platine bzw. Leiterkarte implementiert mit Schnittstellen zum Anschluss einer eingangsseitigen Bilddatenleitung vom PC 1, eines relativen Eingabegeräts wie der Maus 4 und der Bestätigungsvorrichtung (CD) 14, z.B. eines sicheren Tasters. Ausgangsseitig haben die SMU 21, 21' eine Schnittstelle zum Weiterleiten der Bilddaten über die Bilddatenleitung 3 an das Display 2 und mindesten einen Datenausgang bzw. weitere Schnittstelle für einen Datenkanal 11C, z.B. zur Kommunikation mit dem PC 1. Es kann ggf. eine gemeinsame Schnittstelle, z.B. für Maus 4 und den Datenkanal 11C genutzt werden. Ferner kann eine Verbindung zu einem Sicherheitsrechner 7 (FIG.2B) oder dgl. vorgesehen sein.

Die SMU 21 in FIG.4A hat eine zweistufige, kaskadierte Architektur mit zwei Rechnerkomponenten 41, 42, insbesondere einem ersten FPGA 41 und einem separaten zweiten FPGA 42. Die Funktionsweise der FPGAs 41, 42 wird über eine mit diesen signaltechnisch verbundenen Prozessoranordnung 50 geeigneter Bauart gesteuert und ergänzt, welche signaltechnisch mit beiden FPGAs 41, 42 verbunden ist. Der erste FPGA 41 hat einen Eingang für Bilddaten vom PC1 und einen Ausgang für Bilddaten zum Display (LVDS-Sender). Der zweite FPGA 42 hat lediglich einen Eingang für Bilddaten, d.h. kann die Anzeige nicht verändern. Eine bevorzugte softwareimplementierte bzw. rechentechnische Funktionsweise der SMU 21 wird nun anhand von FIG.4A erläutert.

Die Prozessoranordnung 50 erhält Relativkoordinaten von der Maus 4, generiert daraus Zeigerkoordinaten und überwacht bzw. erkennt anhand der Zeigerkoordinaten, ob eine Selektion eines SEE 6 in der GUI 2A vorliegt. Sofern dies nicht vorliegt, übermittelt die Prozessoranordnung 50 Zeigerkoordinaten oder Relativkoordinaten und ggf. Interrupts zu Maustasten über den Datenkanal 11C an den PC 1. Davon ausgehend steuert der PC 1 auf herkömmliche Weise die GUI, bzw. deren Darstellung in Bilddaten für das Display 2. Alternativ können die relativen Eingabesignale der Maus 4 auch parallel an den PC 1 und die SMU 21, 21' übertragen werden.

Weiterhin steuert die Prozessoranordnung 50 den ersten FPGA 41 so, dass dieser FPGA 41 einen Cursor 5 in den Bilddaten zum Display erzeugt, z.B. durch Einblenden bzw. Überschreiben der Bilddaten entsprechend den Zeigerkoordinaten, welche die Prozessoranordnung 50 laufend ermittelt. Dabei kann vorgesehen sein, dass der PC 1 keinen Cursor 5 im GUI einblendet, oder der PC 1 diesen nur für unkritische Bereiche selbst einblendet während nur der erste FPGA 41 den Cursor 5 in kritischen Bereichen einblendet.

Optional kann für die Sicherheit von reiner Darstellung von sicherheitskritischer Information durch einen oder beide FPGAs 41, 42 für anzeigende Überwachungsbereiche der GUI-Grafik das Prüfverfahren gemäß WO 2011/003872 A1 ausgeführt werden, wozu der SMU 21 z.B. vom Sicherheitsrechner 7 Parameter betreffend zu überwachende Bildbereiche zugeführt werden, welche reine Anzeigefunktion haben (keine Bedienelemente).

Wenn die Prozessoranordnung 50 durch Vergleich der laufend ermittelten Zeigerkoordinaten des Cursors 5 mit vorbestimmten bzw. vorgespeicherten Bildkoordinaten des bzw. der SEE 6 eines entsprechenden Überwachungsbereichs erkennt, dass eine Selektion eines SEE 6 vorliegt können die FPGAs 41, 42 in einen Selektions-Überwachungsbetrieb geschaltet werden. Alternativ können die FPGAs 41, 42 eine solche Überwachung kontinuierlich bzw. laufend ausführen, jeweils insbesondere beschränkt auf jeweilige Überwachungsbereiche zu kritischen SEE 6 in der Grafik.

Zu den eingangsseitig von der SMU 21, 21' vom unsicheren PC 1 empfangenen Bilddaten erzeugt der FPGA 41 in einem ersten Funktionsblock CRC1 einen Prüfcode, durch einen geeigneten Codier-Algorithmus z.B. ein CRC-Verfahren, für diejenigen Bilddaten welche einem SEE 6 entsprechen bzw. mit diesem übereinstimmen. Der laufend generierte Code aus dem Funktionsblock CRC1 wird von der Prozessoranordnung 50 mit einem für das jeweilige von ggf. mehreren SEE 6 vorgespeicherten Referenzcode bzw. Soll-Code aus einem Speicher 55 verglichen. Dies stellt eingangsseitig sicher, dass das erwartete SEE 6 korrekt vom PC 1 dargestellt wurde, und wird von der positionsvariablen Darstellung des Cursors 5 nicht beeinflusst. Erst im Signalfluss anschließend blendet der FPGA 41 im Funktionsblock 43 entsprechend der aktuellen Zeigerkoordinaten den Cursor 5 in die Bilddaten ein, z.B. durch überschreiben bzw. überblenden. Im Funktionsblock CRC2 bildet der FPGA 41 einen weiteren zeigerbezogenen Prüfcode für den Bereich der Bilddaten, welcher der aktuell eingeblendeten Darstellung des Cursors 5 entspricht. In einem weiteren Funktionsblock CRC4 bildet der FPGA 41 ferner einen zeigerfreien Prüfcode für einen umgebenden Bereich der Bilddaten, ohne Darstellung des Cursors 5, bspw. der Differenz des Cursor-Bereichs für CRC2 und dem Bildbereich des SEE, oder aber der Differenz des Bereichs für CRC2 und einem darüber hinausgehenden Bereich, bis hin zur gesamten Anzeige der GUI.

Die vom FPGA 41 durch Einblendung des Cursors 5 entsprechend modifizierten Bilddaten werden von einem Ausgang des FPGA 41 über die Bilddatenleitung 3 an das Display 2 ausgegeben. Weiterhin werden diese modifizierten Bilddaten parallel einem zweiten FPGA 42 zugeführt, der anders als der FPGA 41 mit der Bilddatenleitung 3 lediglich über einen Eingang verbunden ist. Der zweite FPGA 42 überblendet, auf identische Weise wie der erste FPGA 41, entsprechend den aktuellen Zeigerkoordinaten der Prozessoranordnung 50 nochmals selbst die Darstellung des Cursors 5 mit identischen Cursor-Bilddaten, diese Bilddaten werden jedoch nicht ausgegeben. Im Funktionsblock CRC3 bildet der FPGA 42 einen weiteren zeigerbezogenen Prüfcode für den Bereich der Bilddaten, welcher der vom FPGA 42 aktuell eingeblendeten Darstellung des Cursors 5 entspricht, auf analoge Weise wie CRC2 im FPGA 41. Im Funktionsblock CRC5 bildet der FPGA 42 einen weiteren zeigerfreien Prüfcode für einen umgebenden Bereich der Bilddaten, ohne Darstellung des Cursors 5, entsprechend CRC 4 im FPGA 41.

Die in den Programmstufen bzw. -Blöcken CRC2, CRC3, CRC4, CRC5 berechneten Prüfcodes werden sicherheitsgerichtet von der Prozessoranordnung 50 ausgewertet insbesondere verglichen. Hierzu vergleicht die Prozessoranordnung 50 laufend in einem Vergleicher bzw. Funktionsblock 53 die zeigerbezogenen Prüfcodes CRC2 und CRC3 miteinander, zwecks Fehlererkennung d.h. um zu prüfen und sicherzustellen, dass der Cursor 5 vom FPGA 41 korrekt eingeblendet wurde. Weiterhin vergleicht die Prozessoranordnung 50 laufend in einem Vergleicher bzw. Funktionsblock 53 die zeigerfreien Prüfcodes CRC4 und CRC5 miteinander, zwecks Fehlererkennung d.h. um zu prüfen und sicherzustellen, dass die Einblendung des Cursors 5 bzw. Modifikation der Bilddaten im FPGA 41 keine unerwünschte bzw. ungewollte Veränderung in anderen Bildbereichen der GUI hervorruft. Falls eine der Vergleichsstufen ausgehend von CRC1, CRC2 oder CRC4 eine Abweichung aufzeigt, wird die Aktivierung bzw. Freigabe der sicherheitskritischen Funktion des SEE 6 gesperrt bzw. nicht zugelassen und ggf. durch eine weiter Bilddatenmodifikation dem Benutzer ein Fehlerfall angezeigt (z.B. durch Ausblenden des SEE 6 oder dgl.). Nur bei positivem Ergebnis aller sicherheitsgerichteter Prüfungen bzw. Vergleiche nutzt die Prozessoranordnung 50 eine, insbesondere im Zeitraum der angezeigten Selektion, erkannt benutzergesteuerte Eingabe an der sicheren CD 14 als Validierung der sicherheitsrelevanten Aktion, die dem jeweiligen SME 6 zugeordnet ist. Nur bei als korrekt überprüfter Anzeige der Selektion löst die SMU 21 diese Funktion bzw. Aktion aus, durch eine Ausgabe der Prozessoranordnung 50 über eine geeigneten Schnittstelle zu einem sicheren System z.B. zum Sicherheitsrechner 7 oder z.B. einer Anlagensteuerung.

Die zweistufige bzw. zweikanalige Architektur mit dem zweiten FPGA 42, welcher unabhängig von der Prozessoranordnung 50 gesteuert und ausgelesen wird, erlaubt dabei eine sichere Anzeige aller sicherheitsrelevanten Funktionen des GUI, insbesondere auch der Einblendung des Cursors 5 durch den ersten FPGA 41. Im Gegensatz zum PC 1 ist das Überwachungsmodul bzw. SMU 21 SIL-fähig bzw. SILgeeignet und kann insbesondere sicherheitszertifiziert sein.

Die SMU 21' in FIG.4B hat weitestgehend identischen Aufbau und identische Funktion wie zu FIG.4A beschrieben und unterscheidet sich insbesondere dadurch, dass beiden FPGA 41, 42 eingangsseitig unmittelbar die vom PC 1 an die SMU 21' übermittelten Bilddaten zugeführt werden, d.h. FPGA 42 nicht durch den Ausgang des FPGA 41 beinflussbar ist. Die sicherheitsgerichtete Prüffunktionen können jedoch identisch bzw. gleichwertig implementiert werden. Es wird insbesondere durch den Vergleich der Prüfcodes aus CRC2 und CRC3 auch hier sichergestellt bzw. überprüft, dass der Cursor 5 durch den FPGA 41 erwartungsgemäß angezeigt wurde. In beiden Fällen kann die Einblendung und Codierung insbesondere laufend und synchron zu den Bilddaten z.B. für jeden Bildschirm-Refresh erfolgen. Die Codierung gemäß den Stufen CRC2... CRC5 kann in beiden Ausführungsformen nur bedarfsweise dann erfolgen, wenn eine Selektion anhand der Position des Cursors 5 von Prozessoranordnung 50 erkannt wird, und ggf. eine korrekte Anzeige des SEE 6 mittels CRC1 festgestellt wurde, da beides Voraussetzung für die anschließende Validierung ist.

Als Variante zur vorstehenden Funktionsweise kann jedoch auch vorgesehen sein, dass der Cursor 5 durch den darstellenden PC 1 eingeblendet wird, insbesondere solange sich die Zeigerposition außerhalb der vorkonfigurierten grafik- bzw. pixelbezogenen Eingabe-Bereiche (EB) der vorbestimmten kritischen SEE 6 befindet. Die SMU 21; 21' meldet z.B. mit der Übermittlung der Zeigerkoordinaten über den Kanal 11C an den PC 1 diesem zugleich, ob der der Cursor 5 auf Bildkoordinaten innerhalb oder außerhalb der EB liegt. Mit dieser Rückmeldung wird der PC1 ggf. aufgefordert den Cursor 5 auszublenden, wenn eine Selektion vorliegt (Zeigerkoordinaten innerhalb eines EB). Befinden sich die Koordinaten innerhalb eines EB, so kann die SMU 21; 21' selbst den jeweiligen EB ergänzend durch Maßnahmen visuell hervorheben, z.B. durch farbliche Umrahmung, ggf. mit Ausblenden des Cursors 5. Auch diese Betriebsweise kann durch Prüfcodes, wie oben erläutert, überprüft werden. Vorteilhaft ist wenn die Einblendung des Cursors 5 bzw. der Hervorhebung der Selektion unmittelbar durch die sichere SMU 21; 21' erfolgt, damit vom PC 1 generierte Bilddaten ohne Cursor 5 bzw. Hervorhebung auf Richtigkeit leichter überprüft werden können, insbesondere bzgl. korrekter Darstellung aller SEE bzw. EB.

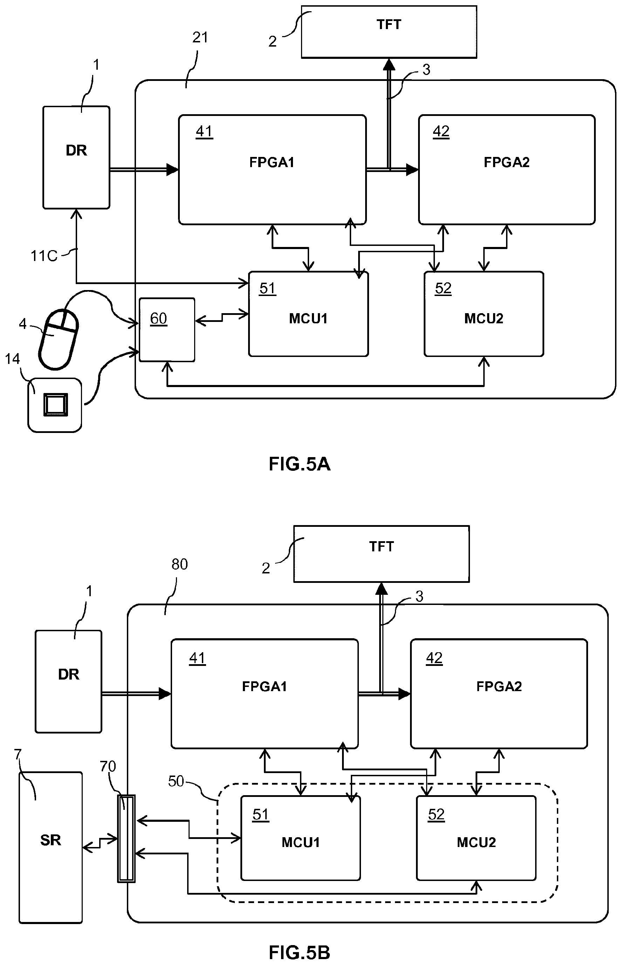

FIG.5A zeigt eine weitere bevorzugte Architektur eines Überwachungsmoduls bzw. SMU 21 gemäß FIG.4A mit einer zweikanaligen Implementierung der Prozessoranordnung 50 durch zwei getrennte Controller bzw. Prozessoren 51, 52. Die Prozessoren 51, 52 implementieren jeweils doppelt und unabhängig alle relevanten Steuerungs- und Überprüfungsfunktionen wie vorstehend zu FIG.4A beschrieben, um für höhere Sicherheitsanforderungen bei ungleichem Verhalten einen Fehlerfall aufzudecken. Beide Prozessoren 51, 52 sind dazu signaltechnisch jeweils mit beiden FPGAs 41, 42 verbunden und überprüfen jeweils gegenseitig und unabhängig auf bestimmungsgemäß bzw. korrekte Funktion (Zwei-Kanalprinzip). Die externe Schnittstelle 61 zum relativen Zeigegerät, z.B. der Maus 4, und insbesondere zum sicheren Taster 4 kann dabei über eine getrennte Komponente ausgeführt oder in den Prozessoren 51, 52 integriert sein.

FIG.5B zeigt eine weitere bevorzugte, durchgehend zweikanalige Architektur eines Überwachungsmoduls 80. Das Überwachungsmodul 80 ist unabhängig von der vorstehend beschriebenen Funktion zur sicheren Eingabe, auch für sich genommen als Weiterentwicklung der Lehre aus WO 2011/003872 A1 zur Überwachung einer sicheren Darstellung (ggf. ohne Eingabefunktion) von Eingangsparametern verwendbar und als erfindungserheblich anzusehen.

Zu überwachende Eingabeparameter können dem Überwachungsmodul 80 über die Schnittstelle 70 z.B. von einem Sicherheitsrechner 7 zugeführt werden.

Der FPGA 41 erzeugt Prüfcodes zu einem oder mehreren grafikbezogenen, vordefinierten Überwachungsbereichen für sicherheitskritische Anzeigen. Die Prüfcodes werden in den zweikanalig implementierten Prozessoren 51, 52 jeweils unabhängig mit einem vorbestimmten Referenzwert entsprechend dem Eingabeparameter verglichen, der als Referenzwert zum jeweiligen Eingabeparameter z.B. bei einer Konfiguration vorgespeichert wurde. Der Referenzwert für den Vergleich kann als Referenzcode ausgehend von einem Eingabeparameter bestimmt werden, z.B. anhand einer Lookup-Tabelle, oder es erfolgt ein Vergleich des aktuellen Eingabeparameters mit einem aus ermittelten Code zurückgewonnenen Referenzparameter, z.B. per Lookup-Tabelle. Hinsichtlich der sonstigen Funktionsweise, insbesondere der Erzeugung von Prüfcodes zu Überwachungsbereichen, wird bzgl. FIG.5B die Lehre aus WO 2011/003872 A1 hier integral einbezogen.

Die zweikanalige Hardware-Implementierung der FPGAs 41, 42 entspricht FIG.4A. Der zweite FPGA 42 ist auch hier mit der Bilddatenleitung 3 ausschließlich über einen Eingang verbunden (nur-Lese-Verbindung), d.h. kann die Bilddaten nicht verändern, während der vorgeschaltete erste FPGA 41 die Bilddaten liest (z.B. als LVDS-Empfänger) und ggf. verändert weitergeben kann (z.B. als LVDS-Sender).

Mit dem Überwachungsmodul 80 nach FIG.5B können insbesondere zwei sicherheitstechnisch vorteilhafte Funktionen implementiert werden, die höhere Sicherheitsstufen erlauben, z.B. SIL-3 oder höher.

Einerseits kann eine sicherheitsgerichtete visuelle Fehleraufdeckung durch das FPGA 41 per Bilddatenmodifikation, insbesondere durch Ausblendung bzw. Einblendung (z.B. ein Weiß-Schalten) oder sonstiges für den Benutzer sichtbares Anzeigen in den Bilddaten am Ausgang des FPGA 41, bei anhand des Prüfcode-Verfahrens erkanntem Fehler der Darstellung durch den zweiten FPGA 42 zuverlässig überprüft werden. Der FPGA 42 vergleicht hierbei die im Fehlerfall erwartete grafische Fehleraufdeckung, welche der FPGA 41 erwartungsgemäß am seinem Ausgang in den Bilddaten erzeugen soll, mit einer entsprechend erwarteten Darstellung, z.B. anhand des Prüfcode-Verfahrens, durch Generieren eines Prüfcodes für die grafische Fehleranzeige und Vergleich mit einem entsprechenden Sollwert bzw. Sollcode. Dieser Vergleich erfolgt wiederum zweikanalig und unabhängig in beiden Prozessoren 51, 52 zur Erhöhung der Sicherheit. Somit wird gewährleistet, dass eine Fehleraufdeckung korrekt bzw. für den Benutzer sichtbar erfolgt. Die Fehleraufdeckung und Gegenprüfung erfolgt vorzugsweise begrenzt auf und jeweils für einzelne vordefinierte Überwachungsbereiche, sodass die restliche Anzeige unbeeinflusst bleibt. Sollte diese Gegenprüfung der Fehleraufdeckung anhand des FPGA 42 kein positives Ergebnis liefern kann eine sicherheitsgerichtete Maßnahme z.B. ein Abschalten oder Umschalten der Anzeige in einen unsicheren Modus erfolgen.

Ergänzend bzw. alternativ kann auch, zur Erhöhung der Bediensicherheit eine visuelle Hervorhebung sicherheitsrelevanter, hinsichtlich korrekter Darstellung überwachter Anzeigebereiche, welche der FPGA 41 durch Bilddatenmodifikation bestimmungsgemäß vornimmt, durch den zweiten FPGA 42 überprüft werden. Die visuelle Hervorhebung bzw. das Kenntlichmachen kann dabei auf unterschiedliche Weise erfolgen, z.B. durch Einblenden einer grafischen Umrahmung oder eines grafischen Symbols, Icons oder Widgets anhand dessen der Benutzer erkennen kann, welche Bereiche in der aktuellen Anzeige am Display 2 tatsächlich vom Überwachungsmodul 80 überwacht werden. Der zweite FPGA 42 kann auch hierzu für die Bilddaten am Ausgang des FPGA 41 einen Prüfcode generieren, bspw. für den Überwachungsbereich inkl. der erwarteten grafischen Hervorhebung, welcher wiederum zweikanalig und unabhängig in beiden Prozessoren 51, 52 mit einem entsprechenden Sollwert bzw. Sollcode verglichen wird. In diesem Fall können die FPGAs 41, 42 also ggf. zwei unterschiedliche Prüfcodes für, einen ersten Prüfcode für die Bilddaten des Überwachungsbereich ohne dessen Kenntlichmachung als überwacht und einen zweiten mit dieser Kenntlichmachung. Bei geeigneten Codier-Algorithmus, etwa mit großem Hamming-Abstand, wird damit zugleich eine zweikanalige Codierung in Bezug auf die ursprünglichen vom PC 1 generierten Bilddaten erzielt. Eine auf diesem Weg vom zweiten FPGA und den Prozessoren 51, 53 zuverlässig als aktiv erkannte Überwachung des jeweiligen Bildbereich kann zudem ausgegeben werden z.B. an den Sicherheitsrechner 7.

Weiterhin kann das Überwachungsmodul 80 eine visuelle Anzeige dahingehend erzeugen, in welchem Betriebsmodus das Überwachungsmodul 80 arbeitet, z.B. mit aktiver Überwachung (sicher) oder inaktiver Überwachung (nicht sicher). Auch dies kann per Bilddatenmodifikation durch das erste FPGA 41 erfolgen und anhand der vorgeschlagenen Architektur mit dem zweiten FPGA 42 und vorzugsweise zwei Prozessoren 51, 52 sicher gegengeprüft werden. Die Statusanzeige durch das Überwachungsmodul 80 ist insbesondere vorteilhaft, wenn das GUI unterschiedliche Modi bzw. kontextabhängig verschiedene Bildschirmmasken anzeigen soll. Anhand des Überwachungsmoduls 80 lässt sich grundsätzlich jegliche Art wünschenswerter Veränderung, der vom PC 1 unsicher generierten Bilddaten, dank der Fähigkeit zur Bilddatenmodifikation in einer ersten Stufe, z.B. im FPGA 1, und einer zweistufigen, insbesondere zweikanaligen Überwachungsfunktion, z.B. mittels des zweiten FPGA 2 in sicherer Weise durchführen. Die zweistufige Implementierung könnte auch anhand eines einzigen FPGAs realisiert werden, das logisch bzw. virtuell in zweistufige Module aufgeteilt ist. Eine hardwaremäßige, echte zweikanalige Implementierung mit zwei Rechnerkomponenten, z.B. FPGAs 41, 42, ist jedoch vorteilhaft. Es können dabei vorteilhaft diversitär verschiedene Komponententypen, z.B. FPGAs 41, 42 unterschiedlicher Bauart verwendet werden, um Risiken systematischer Fehler zu minimieren. Entsprechendes gilt auch für die Prozessoren 51, 52.

Die ebenfalls zweikanalige Realisierung der Prozessoren 51, 52 ist zur höheren Sicherheit vorzugsweise durch elektrische Isolierkomponenten galvanisch von den FPGAs 41, 42 getrennt, sodass ein physisch getrennter Prozessorbereich 50 auf einer gemeinsamen Leiterkarte des Überwachungsmoduls 80 bereitgestellt wird.

Die vollständig zweikanalige Architektur des Überwachungsmoduls 80, mit zwei Rechnerkomponenten 41, 42 zur Bilddatencodierung und zwei Prozessoren 51, 52 zur Funktionskontrolle und -Steuerung ist grundsätzlich hinsichtlich Fehlerbeherrschung und Fehleraufdeckung besonders vorteilhaft. Vorzugsweise haben zumindest beide Prozessoren 51, 52 jeweils unabhängige oder zumindest rückwirkungsfreie Ressourcen wie Spannungsversorgung, Clock, Signalpfade usw.

FIG.6 zeigt schematisch ein sicheres Displaygerät 60 zur Anzeige von Pixelgrafik, insbesondere mit einem TFT-Panel, mit einer in das Gerät integrierten SMU 21 z.B. nach FIG.4A. Rechnergenerierte Bilddaten werden, ggf. nach Umwandlung von einem für PC-Displays üblichen Signalformat wie z.B. HDMI in LVDS durch einen vorhandenen Monitor-Controller, zur SMU 21 geleitet und von dieser an den TFT-Controller des Displaygeräts 60 ausgegeben.

Das Displaygerät 60 hat weiterhin eine integriertes, spezielles Schnittstellenmodul bzw. ein Gateway 61, das über eine bidirektionale Daten-Verbindung mit der SMU 21 verbunden ist, sodass nur ein Anschluss hierfür an der SMU 21 erforderlich ist und das Gateway 61 anwendungsabhängig konfigurierbar ist.

Das Gateway 61 hat in FIG.6 einen Anschluss, z.B. einen USB-Anschluss, für ein COTS-Eingabegerät 4 sowie einen entsprechenden Ausgang zur Verbindung mit dem darstellenden, nicht sicheren PC 1 (nicht gezeigt in FIG.6), über welchen die Relativkoordinaten an den PC 1 weitergeleitet werden um ein GUI zu steuern bzw. den PC 1 zu bedienen. Parallel liefert das Gateway 61 die Relativkoordinaten an die SMU 21, insbesondere zwecks Einblendung des Cursors 5 wie vorstehend beschrieben. Das Gateway 61 hat einen Eingang für die Bestätigungsvorrichtung 14 und stellt u.a. einen logisch sicheren Kanal zwischen der Bestätigungsvorrichtung 14 und der SMU 21 bereit. Ferner stellt das Gateway 61 eine Schnittstelle zur sicherheitsgerichteten Kommunikation über einen sicheren Industrie-Bus, wie z.B. PROFINET oder nach dem PROFIsafe Protokoll bereit, insbesondere zwecks Übermittlung sicherheitsgerichteter Befehle bzw. Informationen, welche die SMU 21 generiert.

Die SMU 21 kann neben der erfindungsgemäß sicheren Eingabefunktion auch eine sichere Darstellung nach dem Prinzip aus WO2011/003872A1 und/oder sichere Eingabe mittels eines Absolut-Eingabegeräts, z.B. eines kapazitiven Touch gemäß EP 2 551 787 B1 realisieren.

## Patentansprüche

1. Verfahren für eine sicherheitsrelevante Eingabe an einer grafischen Benutzeroberfläche, wobei ein Rechner Bilddaten für ein Display erzeugt und ein Eingabegerät zum Bedienen der Benutzeroberfläche, aufweist, wobei das Verfahren umfasst:
Übertragen rechnergenerierter Bilddaten vom Rechner über eine Bilddatenleitung an das Display;
Anzeigen einer Benutzeroberfläche am Display, mit mindestens einem grafischen Bedienelement welches anhand des Eingabegeräts benutzergesteuert selektierbar ist; und
wobei eine Überwachungseinheit mit der Bilddatenleitung verbunden ist und für eine Sicherheitsfunktion zumindest Teile der Bilddaten ausliest; **dadurch gekennzeichnet, dass**
- der Überwachungseinheit Eingabeinformation ausgehend vom Eingabegerät zugeführt wird, abhängig von welcher benutzergesteuerte Selektion des Bedienelements durch die Überwachungseinheit erkennbar ist;
- die Überwachungseinheit zum Empfang einer benutzergesteuerten Bestätigung über einen sicheren Signalpfad mit einer Bestätigungsvorrichtung verbunden ist, und
- die Überwachungseinheit sicherstellt und/oder überprüft, dass eine erkannte Selektion des Bedienelements korrekt in dem Display zugeführten Bilddaten dargestellt ist; und
- die Überwachungseinheit bei Empfang einer benutzergesteuerten Bestätigung während einer dargestellten Selektion des Bedienelements einen diesem zugeordneten sicherheitsrelevante Bedienbefehl freigibt bzw. auslöst, insbesondere über einen sicheren Signalpfad ausgibt.

2. Verfahren nach Anspruch 1, **dadurch gekennzeichnet, dass** die Überwachungseinheit sicherstellt, dass eine erkannte Selektion des Bedienelements korrekt in dem Display zugeführten Bilddaten dargestellt ist, indem die Überwachungseinheit zumindest einen Teil der Bilddaten modifiziert, die zur Anzeige in einem vorbestimmten Bildbereich bestimmt sind, welcher dem Bedienelement zugeordnet ist, und die Überwachungseinheit entsprechend modifizierte Bilddaten an das Display weiterleitet;
wobei die modifizierten Bilddaten vorzugsweise einen Zeiger abhängig von der Eingabeinformation darstellen; und/oder wobei die modifizierten Bilddaten vorzugsweise eine visuelle Hervorhebung der Selektion für den Benutzer, insbesondere im vorbestimmten Bildbereich, am Display bewirken; und/oder modifizierte Bilddaten vorzugsweise rechnergenerierte Bilddaten bereichsweise überblenden.

3. Verfahren nach Anspruch 1, **dadurch gekennzeichnet, dass** rechnergenerierte Bilddaten eine Selektion des Bedienelements darstellen, und die Überwachungseinheit überprüft, dass erkannte Selektion des Bedienelements korrekt in dem Display zugeführten Bilddaten dargestellt ist, indem die Überwachungseinheit für Bilddaten, die zur Anzeige in einem vorbestimmten Bildbereich bestimmt sind, welcher dem Bedienelement zugeordnet ist, einen Prüfcode berechnet und diesen Prüfcode mit mindestens einem vorgespeicherten Referenzcode vergleicht.

4. Verfahren nach Anspruch 1 oder 2, **dadurch gekennzeichnet, dass** Eingabeinformation vom Eingabegerät über die Überwachungseinheit an den darstellenden Rechner übermittelt wird oder über den darstellenden Rechner an die Überwachungseinheit übermittelt wird.

5. Verfahren nach Anspruch 2, **dadurch gekennzeichnet, dass**
- die Überwachungseinheit eine erste Rechnerkomponente umfasst, welcher eingangsseitig die rechnergenerierten Bilddaten zugeführt werden und welche abhängig von einer Selektion des sicherheitskritischen Bedienelements diese Bilddaten zur visuellen Hervorhebung der Selektion modifiziert und ausgangsseitige Bilddaten für das Display weiterleitet, und
- die Überwachungseinheit eine zweite Rechnerkomponente umfasst, welche zur Überprüfung von ausgangsseitigen Bilddaten der ersten Rechnerkomponente genutzt wird.

6. Verfahren nach Anspruch 5, **dadurch gekennzeichnet, dass** die erste Rechnerkomponente zu rechnergenerierten Bilddaten, welche zur Anzeige im vorbestimmten Bildbereich bestimmt sind, einen Prüfcode erster Stufe berechnet und die Überwachungseinheit diesen Prüfcode erster Stufe mit mindestens einem vorgespeicherten Referenzcode für den vorbestimmten Bildbereich vergleicht, wobei die erste Rechnerkomponente vorzugsweise eingangsseitig in einem ersten Schritt Prüfcodes erster Stufe zu rechnergenerierten Bilddaten berechnet und daran anschließend in einem zweiten Schritt Bilddaten modifiziert.

7. Verfahren nach Anspruch 5 oder 6, insbesondere nach Anspruch 6, **dadurch gekennzeichnet, dass**
- die erste Rechnerkomponente zu von der ersten Rechnerkomponente modifizierten Bilddaten, welche zur Anzeige im vorbestimmten Bildbereich bestimmt sind, einen ersten Prüfcode zweiter Stufe berechnet;
- die zweite Rechnerkomponente zu ausgangsseitigen Bilddaten der ersten Rechnerkomponente, welche zur Anzeige im vorbestimmten Bildbereich bestimmt sind, einen zweiten Prüfcode zweiter Stufe berechnet;
- die Überwachungseinheit die Prüfcodes zweiter Stufe miteinander vergleicht, insbesondere zwecks Überprüfung einer bestimmungsgemäßen Hervorhebung der Selektion durch die erste Rechnerkomponente; und
- vorzugsweise beide Rechnerkomponenten jeweils einen dritten Prüfcode zu Bilddaten des vorbestimmten Bildbereichs ohne Selektion berechnen, welche die Überwachungseinheit miteinander vergleicht zwecks Überprüfung einer bestimmungsgemäßen Anzeige des Bedienelements; und/oder
- die Rechnerkomponente(n) nur bei erkannter Selektion des Bedienelements Prüfcodes berechnet bzw. berechnen, insbesondere zu Bilddaten für einen vorbestimmten, dem Bedienelement zugeordneten Bildbereich.

8. Verfahren nach einem der Ansprüche 2 und 4 bis 7, **dadurch gekennzeichnet, dass** die erste Rechnerkomponente die Bilddaten zur visuellen Hervorhebung der Selektion so modifiziert, dass das selektierte Bedienelement in einem von einem nicht selektierten ersten Darstellungszustand visuell unterscheidbaren selektierten zweiten Zustand angezeigt wird, beispielsweise durch Einblendung einer Umrahmung, durch Farbänderung oder dgl., und/oder
die erste Rechnerkomponente modifizierte Bilddaten in einem Bilddatenstrom zusammen mit rechnergenerierten Bilddaten für das Display ausgibt bzw. weiterleitet.

9. Verfahren nach einem der vorstehenden Ansprüche, wobei zum Bedienen der Benutzeroberfläche ein Zeiger, insbesondere ein Mauszeiger, am Display angezeigt wird, **dadurch gekennzeichnet, dass**
- der Zeiger ausschließlich von der Überwachungseinheit generiert wird durch Bilddatenmodifikation in der Überwachungseinheit, insbesondere ermöglicht auf Grundlage der Eingabeinformation welche der Überwachungseinheit zugeführt wird, wobei das Eingabegerät, insbesondere eine Computermaus, vorzugsweise unmittelbar an die Überwachungseinheit angeschlossen ist, und diese Eingabeinformation an den darstellenden Rechner weiterleitet; oder
- der Zeiger außerhalb aller vorbestimmter Bildbereiche durch den darstellenden Rechner generiert wird und, wenn eine Selektion eines sicherheitskritischen Bedienelements durch die Überwachungseinheit erkannt wird, in dem jeweils zugeordneten Bildbereich, vorzugsweise durch Bilddatenmodifikation in der Überwachungseinheit, kein rechnergenerierter Zeiger angezeigt wird, wobei das Eingabegerät, insbesondere eine Computermaus, vorzugsweise unmittelbar an den darstellenden Rechner angeschlossen ist und dieser Eingabeinformation an die Überwachungseinheit weiterleitet; und/oder
- zu jeweils N aufeinanderfolgenden Bildzyklen der Bilddaten, der Mauszeiger lediglich zu einer Anzahl m < N Bildzyklen vom Rechner oder der Überwachungseinheit dargestellt wird;
- und/oder die Eingabeinformation absolute Koordinateninformation oder relative Koordinateninformation darstellt.

10. Überwachungseinheit zum Überwachen einer grafischen Benutzeroberfläche, insbesondere gemäß einem Verfahren nach einem der Ansprüche 1 bis 9, umfassend
- eine digitale Bilddatenschnittstelle zur Verbindung mit einer Bilddatenleitung für die Übertragung rechnergenerierter Bilddaten von einem Rechner an ein Display, insbesondere eine LVDS-Schnittstelle, eine HDMI-Schnittstelle oder dgl.;
- mindestens eine Rechnerkomponente welche eine Sicherheitsfunktion implementiert und zumindest Teile der Bilddaten über die Bilddatenschnittstelle ausliest;
- eine Geräteschnittstelle für Eingabeinformation, insbesondere ausgehend von einem Eingabegerät, insbesondere einem Zeigegerät, zur benutzergesteuerten Selektion eines grafischen Bedienelements;
**dadurch gekennzeichnet, dass**
- die Überwachungseinheit einen physischen Bestätigungs-Eingang für eine sichere Bestätigungsvorrichtung aufweist, und
- die mindestens eine Rechnerkomponente eingerichtet ist um sicherzustellen und/oder zu überprüfen, dass eine erkannte Selektion des Bedienelements korrekt in dem Display zugeführten Bilddaten dargestellt ist; und
- die Überwachungseinheit eingerichtet ist um bei Empfang einer Bestätigungseingabe über die Bestätigungs-Schnittstelle während einer dargestellten Selektion des Bedienelements einen zugeordneten sicherheitsrelevanten Bedienbefehl auszugeben, insbesondere über eine Sicherheits-Schnittstelle.

11. Überwachungseinheit nach Anspruch 10, **dadurch gekennzeichnet, dass**
- die mindestens eine Rechnerkomponente zur Bilddatenmodifikation und/oder zur Berechnung von Prüfcodes aus den Bilddaten eingerichtet ist;
- die Überwachungseinheit mindestens einen Speicher für die Vorgabe vorbestimmter Bildbereiche und/oder Referenzcodes aufweist und/oder
- die Überwachungseinheit eine Controllerkomponente für ein Eingabegerät aufweist, welche mit der Geräteschnittstelle verbunden ist zum unmittelbaren Anschluss eines Eingabegeräts, insbesondere einer Computermaus, an die Überwachungseinheit, wobei die Überwachungseinheit vorzugsweise eine Datenschnittstelle, insbesondere eine bidirektionale Datenschnittstelle, zum Übertragen von Eingabeinformation an einen Rechner aufweist.

12. Überwachungseinheit nach dem Oberbegriff aus Anspruch 10, insbesondere zum Überwachen einer grafischen Benutzeroberfläche gemäß einem Verfahren nach Anspruch 2,
**dadurch gekennzeichnet, dass**
die Überwachungseinheit eine zweikanalige Rechnerarchitektur aufweist mit
- einer ersten Rechnerkomponente, welche eingerichtet ist um eingangsseitig rechnergenerierte Bilddaten zu erhalten und abhängig von einer Sicherheitsfunktion zumindest einen Teil der Bilddaten zu modifizieren, die zur Anzeige in einem vorbestimmten Bildbereich bestimmt sind, sowie ausgangsseitig Bilddaten für ein Display bereitzustellen, und mit
- einer zweiten Rechnerkomponente, welche eingerichtet ist um von der ersten Rechnerkomponente bereitgestellte Bilddaten zu überprüfen, durch Berechnung eines Prüfcodes für Bilddaten, welche zur Anzeige in dem vorbestimmten Bildbereich bestimmt sind, und
- dass die Überwachungseinheit eingerichtet ist, berechnete Prüfcodes mit jeweils mindestens einem vorgespeicherten Referenzcode zu vergleichen, insbesondere zwecks Überprüfung einer bestimmungsgemäßen Hervorhebung durch die erste Rechnerkomponente und/oder zwecks Veranlassung einer sicherheitsgerichteten Reaktion.

13. Überwachungseinheit nach Anspruch 12, **dadurch gekennzeichnet, dass**
die erste Rechnerkomponente konfiguriert ist um zu rechnergenerierten Bilddaten, welche zur Anzeige in einem Überwachungsbereich bestimmt sind, einen Prüfcode zu berechnen für einen sicherheitsgerichteten Vergleich mit mindestens einem vorgespeicherten Referenzwert für den Überwachungsbereich, wobei die erste Rechnerkomponente zuerst eingangsseitig Prüfcodes zu rechnergenerierten Bilddaten berechnet und daran anschließend in einer zweiten Stufe Bilddaten modifiziert,
wobei die erste und zweite Rechnerkomponente durch zwei getrennte integrierte Schaltungen, wie FPGA, ASIC oder dgl., insbesondere unterschiedlicher Bauart, implementiert sind.

14. Überwachungseinheit nach einem der Ansprüche 10 bis 13,
**dadurch gekennzeichnet, dass**
ein Modul zur sicherheitsgerichteten Kommunikation über eine Bus-Schnittstelle als Sicherheits-Schnittstelle zur Ausgabe von sicherheitsrelevanten Bedienbefehlen mit der Überwachungseinheit verbunden bzw. in diese integriert ist.

15. Überwachungseinheit nach einem der Ansprüche 10 bis 14,
**dadurch gekennzeichnet, dass**
die Überwachungseinheit konfiguriert ist zur Durchführung mindestens eines kennzeichnenden Verfahrensschritts nach einem der Ansprüche 2 bis 9.

16. System für eine sicherheitsrelevante Eingabe an einer grafischen Benutzeroberfläche, umfassend einen Rechner und ein mit diesem über eine Bilddatenleitung verbundenes Display für Pixelgrafik, **gekennzeichnet durch**
eine vom Rechner physisch getrennte Überwachungseinheit nach einem der Ansprüche 10 bis 15, wobei
- ein Eingabegerät, insbesondere eine Computermaus, zum Bedienen einer Benutzeroberfläche unmittelbar an die Geräteschnittstelle der Überwachungseinheit angeschlossen ist; und
- eine separate sichere Bestätigungsvorrichtung, insbesondere ein Sicherheitstaster an den physischen Bestätigungs-Eingang der Überwachungseinheit angeschlossen ist.

17. Displaygerät zur Anzeige von Pixelgrafik, insbesondere mit einem TFT-Panel, **gekennzeichnet durch** eine in das Gerät integrierte Überwachungseinheit nach einem der Ansprüche 10 bis 15 sowie zumindest einen mit der Geräteschnittstelle der Überwachungseinheit verbunden Anschluss für ein Eingabegerät sowie einen mit dem Bestätigungs-Eingang der Überwachungseinheit verbunden Anschluss für eine sichere Bestätigungsvorrichtung.
